(19) Europäisches Patentamt
European Patent Office
Office européen des brevets

(11) EP 3 941 970 B1

(12) EUROPEAN PATENT SPECIFICATION

(45) Date of publication and mention of the grant of the patent:
**15.10.2025 Bulletin 2025/42**

(21) Application number: **20718078.7**

(22) Date of filing: **16.03.2020**

(51) International Patent Classification (IPC):
***C08G 77/20*** *(2006.01)* ***C08F 230/08*** *(2006.01)*
***C08G 77/26*** *(2006.01)* ***C09D 183/08*** *(2006.01)*

(52) Cooperative Patent Classification (CPC):
(C-Sets available)
**C09D 183/08; C08F 2/48; C08F 222/102; C08F 222/1065; C08F 230/08; C08F 290/068; C08G 77/20; C08G 77/26** (Cont.)

(86) International application number:
**PCT/US2020/022895**

(87) International publication number:
**WO 2020/190833 (24.09.2020 Gazette 2020/39)**

(54) **UV CURABLE COMPOSITIONS FOR DIRT PICK-UP RESISTANCE**

UV-HÄRTBARE ZUSAMMENSETZUNGEN FÜR SCHMUTZAUFNAHMEBESTÄNDIGKEIT

COMPOSITIONS DURCISSABLES SOUS UV AMÉLIORANT LA RÉSISTANCE À LA RÉTENTION DES SALISSURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2019 US 201962820127 P**

(43) Date of publication of application:
**26.01.2022 Bulletin 2022/04**

(73) Proprietor: **BASF SE**
**67056 Ludwigshafen am Rhein (DE)**

(72) Inventors:
- **RECKER, Andrew**
  **Canton, Michigan 48188 (US)**
- **BHASKAR, Avinash**
  **Southfield, Michigan 48034 (US)**
- **YU, Ziniu**
  **Southfield, Michigan 48034 (US)**

(74) Representative: **Altmann Stößel Dick Patentanwälte PartG mbB**
**Isartorplatz 1**
**80331 München (DE)**

(56) References cited:
**KR-B1- 101 784 002** **US-A- 6 103 370**

- **JIYE CHENG ET AL: "Synthesis and properties of photopolymerizable bifunctional polyether-modified polysiloxane polyurethane acrylate prepolymer", JOURNAL OF ADHESION SCIENCE AND TECHNOLOGY,, vol. 30, no. 1, 1 January 2016 (2016-01-01), pages 2 - 12, XP002791112, DOI: 10.1080/01694243.2015.1087255**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 290/068, C08F 222/103, C08F 222/102, C08F 222/1065;**
C08F 222/102, C08F 222/103, C08F 222/1065;
C08F 222/1065, C08F 222/102;
C08F 222/1065, C08F 222/102, C08F 222/103, C08F 230/08

## Description

### CROSS-REFERENCE TO RELATED APPLICATIONS

The present application claims the benefit of and priority to US patent application no. 62/820,127, filed on March 18, 2019.

### FIELD

The present technology is directed to a UV curable coating composition that includes an ethylenically unsaturated polymerizable compound, a functionalized siloxane compound, and optionally a micronized inorganic particle(s). The technology is further directed to methods for forming a photocured coating on a substrate and articles that include a substrate and a photocured coating, wherein the photocured coating is a prepared from the composition. The coating may provide improved dirt and/or brake dust pick-up resistance.

### SUMMARY

In one aspect, the present technology provides a UV curable coating composition that includes an ethylenically unsaturated polymerizable compound and a functionalized siloxane compound of Formula I:

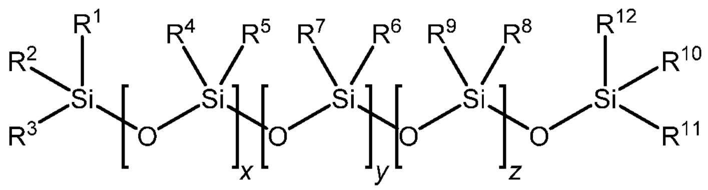

Formula I

wherein: $R^1$, $R^2$, $R^3$, $R^4$, $R^5$, $R^6$, $R^7$, $R^8$, $R^9$, $R^{10}$, $R^{11}$, and $R^{12}$ are independently a H or hydrocarbon. In any embodiment, $R^8$ may instead be a group of Formula II:

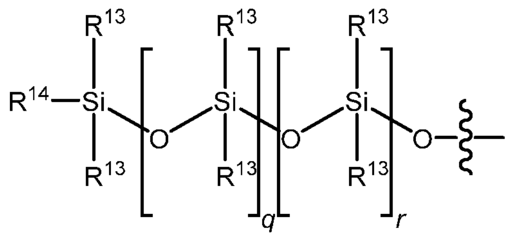

Formula II

wherein: $R^{13}$ and $R^{14}$ at each occurrence are independently a H or $C_1$-$C_{20}$ hydrocarbon; q and *r* are independently 0 or an integer from 1 to 2000; x is 0 or an integer from 1 to 2000; and y and z are independently 0 or an integer from 1 to 200. In the compound of Formula I, $x+y+z \geq 3$ and at least one $R^1$, $R^2$, $R^3$, $R^4$, $R^5$, $R^6$, $R^7$, $R^8$, $R^9$, $R^{10}$, $R^{11}$, and $R^{12}$ comprises an ethylenical unsaturated functional group capable of undergoing covalent bonding during photocure, wherein at least one of R2 , R6 , R8 , and R10 is a group of Formula VI of appended claim 1. In any embodiment, the hydrocarbon may be interrupted by one or more -O-, - CO-, -CONH-, -CONHCO-, and -NH-. In any embodiment, the hydrocarbon may be substituted with one or more hydroxy groups. In any embodiment, the hydrocarbon may include a functional group comprising an ethylenically unsaturated group capable of undergoing covalently bonding during a photocuring process.

In any embodiment, the composition may include a micronized inorganic particle(s). In any embodiment, the composition may include a hindered amine light stabilizer, an ultraviolet light absorber, a phenolic antioxidant, or a combination of two or more thereof.

In another apect, the present technology provides a method for forming a photocured coating on a substrate, the method including applying the UV curable coating composition to a substrate and irradiating the composition with a light source to form the photocured coating. The present technology also provides an article that includes a substrate and a photocured coating, wherein the photocured coating is a prepared from the UV curable coating composition.

## BRIEF DESCRIPTION OF THE DRAWINGS

FIG. 1 is a graph illustrating the friction coefficient of cured coated panels, according to the Examples.

FIG. 2 is a graph illustrating water contact angle of cured coated panels, according to the Examples.

## DETAILED DESCRIPTION

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (*e.g.*, "such as") provided herein, is intended merely to better illuminate the embodiments and does not pose a limitation on the scope of the claims unless otherwise stated. No language in the specification should be construed as indicating any non-claimed element as essential.

Unless otherwise indicated, numeric ranges, for instance as in "from 2 to 10," are inclusive of the numbers defining the range (*e.g.*, 2 and 10).

Unless otherwise indicated, ratios, percentages, parts, and the like are by weight.

As used herein, the term (meth)acrylic or (meth)acrylate refers to acrylic or methacrylic acid, esters of acrylic or methacrylic acid, and salts, amides, and other suitable derivatives of acrylic or methacrylic acid, and mixtures thereof.

As used herein, the term "acrylic-containing group" or "methacrylate-containing group" refers to a compound that has a polymerizable acrylate or methacrylate group.

As used herein, "hydrocarbon" groups includes alkyl, alkenyl, alkynyl, cycloalkyl, aryl, alkaryl, aralkyl, and the like. Hydrocarbons may be interrupted by one or more hetero groups including -O-, -CONH-, -CONHCO-, -NH-, -CSNH-, -CO-, -CS-, - S-, -SO-, and the like. Hydrocarbon groups may be branched or linear. In some embodiments, hydrocarbon groups may be substituted. In some embodiments, hydrocarbon groups may be unsubstituted.

In general, as used herein, "substituted" refers to an alkyl, alkenyl, alkynyl, aryl, or ether group, as defined below (e.g., an alkyl group) in which one or more bonds to a hydrogen atom contained therein are replaced by a bond to non-hydrogen or non-carbon atoms. Substituted groups also include groups in which one or more bonds to a carbon(s) or hydrogen(s) atom are replaced by one or more bonds, including double or triple bonds, to a heteroatom. Thus, a substituted group will be substituted with one or more substituents, unless otherwise specified. In some embodiments, a substituted group is substituted with 1, 2, 3, 4, 5, or 6 substituents. Examples of substituent groups include: halogens (i.e., F, Cl, Br, and I); hydroxyls; alkoxy, alkenoxy, alkynoxy, aryloxy, aralkyloxy, heterocyclyloxy, and heterocyclylalkoxy groups; carbonyls (oxo); carboxyls; esters; urethanes; oximes; hydroxylamines; alkoxyamines; aralkoxyamines; thiols; sulfides; sulfoxides; sulfones; sulfonyls; sulfonamides; amines; N-oxides; hydrazines; hydrazides; hydrazones; azides; amides; ureas; amidines; guanidines; enamines; imides; isocyanates; isothiocyanates; cyanates; thiocyanates; imines; nitro groups; nitriles (i.e., CN); and the like.

As used herein, "alkyl" groups include straight chain and branched alkyl groups having from 1 to about 20 carbon atoms, and typically from 1 to 12 carbons or, in some embodiments, from 1 to 8 carbon atoms. As employed herein, "alkyl groups" include cycloalkyl groups as defined below. Alkyl groups may be substituted or unsubstituted. Examples of straight chain alkyl groups include methyl, ethyl, n-propyl, n-butyl, n-pentyl, n-hexyl, n-heptyl, and n-octyl groups. Examples of branched alkyl groups include, but are not limited to, isopropyl, sec-butyl, t-butyl, neopentyl, and isopentyl groups. Representative substituted alkyl groups may be substituted one or more times with, for example, amino, thio, hydroxy, cyano, alkoxy, and/or halo groups such as F, Cl, Br, and I groups. As used herein the term haloalkyl is an alkyl group having one or more halo groups. In some embodiments, haloalkyl refers to a per-haloalkyl group.

Alkenyl groups are straight chain, branched or cyclic alkyl groups having 2 to about 20 carbon atoms, and further

including at least one double bond. In some embodiments alkenyl groups have from 1 to 12 carbons, or, typically, from 1 to 8 carbon atoms. Alkenyl groups may be substituted or unsubstituted. Alkenyl groups include, for instance, vinyl, propenyl, 2-butenyl, 3-butenyl, isobutenyl, cyclohexenyl, cyclopentenyl, cyclohexadienyl, butadienyl, pentadienyl, and hexadienyl groups among others. Alkenyl groups may be substituted similarly to alkyl groups. Divalent alkenyl groups, i.e., alkenyl groups with two points of attachment, include, but are not limited to, $CH-CH=CH_2$, $C=CH_2$, or $C=CHCH_3$.

Cycloalkyl groups are cyclic alkyl groups such as, but not limited to, cyclopropyl, cyclobutyl, cyclopentyl, cyclohexyl, cycloheptyl, and cyclooctyl groups. In some embodiments, the cycloalkyl group has 3 to 8 ring members, whereas in other embodiments the number of ring carbon atoms range from 3 to 5, 6, or 7. Cycloalkyl groups may be substituted or unsubstituted. Cycloalkyl groups further include polycyclic cycloalkyl groups such as, but not limited to, norbornyl, adamantyl, bornyl, camphenyl, isocamphenyl, and carenyl groups, and fused rings such as, but not limited to, decalinyl, and the like. Cycloalkyl groups also include rings that are substituted with straight or branched chain alkyl groups as defined above. Representative substituted cycloalkyl groups may be monosubstituted or substituted more than once, such as, but not limited to: 2,2-; 2,3-; 2,4-; 2,5-; or 2,6-disubstituted cyclohexyl groups or mono-, di-, or tri-substituted norbornyl or cycloheptyl groups, which may be substituted with, for example, alkyl, alkoxy, amino, thio, hydroxy, cyano, and/or halo groups.

As used herein, "aryl", or "aromatic," groups are cyclic aromatic hydrocarbons that do not contain heteroatoms. Aryl groups include monocyclic, bicyclic and polycyclic ring systems. Thus, aryl groups include, but are not limited to, phenyl, azulenyl, heptalenyl, biphenylenyl, indacenyl, fluorenyl, phenanthrenyl, triphenylenyl, pyrenyl, naphthacenyl, chrysenyl, biphenyl, anthracenyl, indenyl, indanyl, pentalenyl, and naphthyl groups. An aryl group with one or more alkyl groups may also be referred to as alkaryl groups. In some embodiments, aryl groups contain 6-14 carbons, and in others from 6 to 12 or even 6-10 carbon atoms in the ring portions of the groups. The phrase "aryl groups" includes groups containing fused rings, such as fused aromatic-aliphatic ring systems (e.g., indanyl, tetrahydronaphthyl, and the like). Aryl groups may be substituted or unsubstituted.

Heterocyclyl or heterocycle refers to both aromatic and nonaromatic ring compounds including monocyclic, bicyclic, and polycyclic ring compounds containing 3 or more ring members of which one or more is a heteroatom such as, but not limited to, N, O, and S. Examples of heterocyclyl groups include, but are not limited to: unsaturated 3 to 8 membered rings containing 1 to 4 nitrogen atoms such as, but not limited to pyrrolyl, pyrrolinyl, imidazolyl, pyrazolyl, pyridinyl, dihydropyridinyl, pyrimidinyl, pyrazinyl, pyridazinyl, triazolyl (*e.g.* 4H-1,2,4-triazolyl, 1H-1,2,3-triazolyl, 2H-1,2,3-triazolyl etc.), tetrazolyl, (*e.g.* 1H-tetrazolyl, 2H tetrazolyl, etc.); saturated 3 to 8 membered rings containing 1 to 4 nitrogen atoms such as, but not limited to, pyrrolidinyl, imidazolidinyl, piperidinyl, piperazinyl; condensed unsaturated heterocyclic groups containing 1 to 4 nitrogen atoms such as, but not limited to, indolyl, isoindolyl, indolinyl, indolizinyl, benzimidazolyl, quinolyl, isoquinolyl, indazolyl, benzotriazolyl; unsaturated 3 to 8 membered rings containing 1 to 2 oxygen atoms and 1 to 3 nitrogen atoms such as, but not limited to, oxazolyl, isoxazolyl, oxadiazolyl (e.g. 1,2,4-oxadiazolyl, 1,3,4-oxadiazolyl, 1,2,5-oxadiazolyl, etc.); saturated 3 to 8 membered rings containing 1 to 2 oxygen atoms and 1 to 3 nitrogen atoms such as, but not limited to, morpholinyl; unsaturated condensed heterocyclic groups containing 1 to 2 oxygen atoms and 1 to 3 nitrogen atoms, for example, benzoxazolyl, benzoxadiazolyl, benzoxazinyl (*e.g.* 2H-1,4-benzoxazinyl etc.); unsaturated 3 to 8 membered rings containing 1 to 3 sulfur atoms and 1 to 3 nitrogen atoms such as, but not limited to, thiazolyl, isothiazolyl, thiadiazolyl (e.g. 1,2,3-thiadiazolyl, 1,2,4-thiadiazolyl, 1,3,4-thiadiazolyl, 1,2,5-thiadiazolyl, etc.); saturated 3 to 8 membered rings containing 1 to 2 sulfur atoms and 1 to 3 nitrogen atoms such as, but not limited to, thiazolodinyl; saturated and unsaturated 3 to 8 membered rings containing 1 to 2 sulfur atoms such as, but not limited to, thienyl, dihydrodithiinyl, dihydrodithionyl, tetrahydrothiophene, tetrahydrothiopyran; unsaturated condensed heterocyclic rings containing 1 to 2 sulfur atoms and 1 to 3 nitrogen atoms such as, but not limited to, benzothiazolyl, benzothiadiazolyl, benzothiazinyl (e.g. 2H-1,4-benzothiazinyl, etc.), dihydrobenzothiazinyl (*e.g.* 2H-3,4-dihydrobenzothiazinyl, etc.), unsaturated 3 to 8 membered rings containing oxygen atoms such as, but not limited to furyl; unsaturated condensed heterocyclic rings containing 1 to 2 oxygen atoms such as benzodioxolyl (*e.g.*, 1,3-benzodioxoyl, etc.); unsaturated 3 to 8 membered rings containing an oxygen atom and 1 to 2 sulfur atoms such as, but not limited to, dihydrooxathiinyl; saturated 3 to 8 membered rings containing 1 to 2 oxygen atoms and 1 to 2 sulfur atoms such as 1,4-oxathiane; unsaturated condensed rings containing 1 to 2 sulfur atoms such as benzothienyl, benzodithiinyl; and unsaturated condensed heterocyclic rings containing an oxygen atom and 1 to 2 oxygen atoms such as benzoxathiinyl. Heterocyclyl group also include those described above in which one or more S atoms in the ring is double-bonded to one or two oxygen atoms (sulfoxides and sulfones). For example, heterocyclyl groups include tetrahydrothiophene oxide and tetrahydrothiophene 1,1-dioxide. Typical heterocyclyl groups contain 5 or 6 ring members. Thus, for example, heterocyclyl groups include morpholinyl, piperazinyl, piperidinyl, pyrrolidinyl, imidazolyl, pyrazolyl, 1,2,3-triazolyl, 1,2,4-triazolyl, tetrazolyl, thiophenyl, thiomorpholinyl, thiomorpholinyl in which the S atom of the thiomorpholinyl is bonded to one or more O atoms, pyrrolyl, pyridinyl homopiperazinyl, oxazolidin-2-onyl, pyrrolidin-2-onyl, oxazolyl, quinuclidinyl, thiazolyl, isoxazolyl, furanyl, dibenzylfuranyl, and tetrahydrofuranyl. Heterocyclyl or heterocycles may be substituted.

The term "carboxyl" or "carboxylate" as used herein refers to a -C(O)OH group or to its ionized form, -C(O)O-.

The term "carboxyl" or "carboxylate" as used herein refers to a -C(O)OH group or to its ionized form, -C(O)O-.

The term "carbonyl" as used herein refers to a -C(O)- group.

The term "epoxy" as used herein refers to a three atom ring with one oxygen and two carbon atoms. In some embodiments, the carbon atoms may be substituted with an alkyl, alkoxy (including polyethers), alkenyl, alkynyl, cycloalkyl, aryl, aralkyl, heterocyclylalkyl or heterocyclyl group as defined herein. In some embodiments, the epoxy is an alkyl epoxy, alicyclic epoxy, epoxy-polyether, or epoxy-aralkyl.

The term "hydroxyl' as used herein can refer to -OH or its ionized form, -O-.

The term "amine" (or "amino") as used herein refers to $-NR^{65}R^{66}$ groups, wherein $R^{65}$ and $R^{66}$ are independently hydrogen, or a substituted or unsubstituted alkyl, alkenyl, alkynyl, cycloalkyl, aryl, aralkyl, heterocyclylalkyl or heterocyclyl group as defined herein. In some embodiments, the amine is alkylamino, dialkylamino, arylamino, or alkylarylamino.

Groups described herein having two or more points of attachment (*i.e.,* divalent, trivalent, or polyvalent) within the compound of the present technology are designated by use of the suffix, "ene." For example, divalent alkyl groups are alkylene groups, divalent aryl groups are arylene groups, divalent heteroaryl groups are divalent heteroarylene groups, and so forth. Substituted groups having a single point of attachment to the compound of the present technology are not referred to using the "ene" designation.

In one aspect, the present technology provides a UV curable coating composition that includes an ethylenically unsaturated polymerizable compound and a functionalized siloxane compound of Formula I:

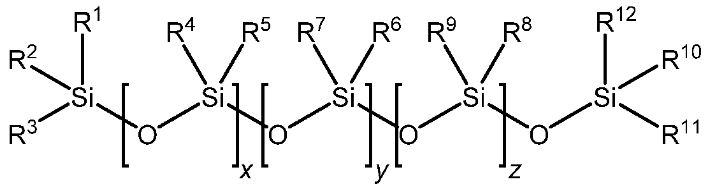

Formula I

wherein: $R^1$, $R^2$, $R^3$, $R^4$, $R^5$, $R^6$, $R^7$, $R^8$, $R^9$, $R^{10}$, $R^{11}$, and $R^{12}$ are independently a H or hydrocarbon. In any embodiment, $R^8$ may instead be a group of Formula II:

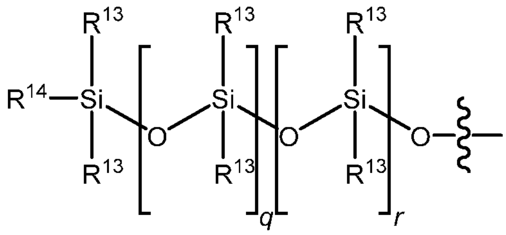

Formula II

wherein: $R^{13}$ and $R^{14}$ at each occurrence are independently a H or $C_1$-$C_{20}$ hydrocarbon; q and *r* are independently 0 or an integer from 1 to 2000; x is 0 or an integer from 1 to 2000; and y and z are independently 0 or an integer from 1 to 200. In the compound of Formula I, $x+y+z \geq 3$ and at least one $R^1$, $R^2$, $R^3$, $R^4$, $R^5$, $R^6$, $R^7$, $R^8$, $R^9$, $R^{10}$, $R^{11}$, and $R^{12}$ comprises an ethylenical unsaturated functional group capable of undergoing covalent bonding during photocure, wherein at least one of R2, R6 , R8 , and R10 is a group of Formula VI described below.

In any embodiment, the hydrocarbon may be interrupted by one or more -O-, -CO-, -CONH-, -CONHCO-, and -NH-. In any embodiment, the hydrocarbon may be substituted with one or more hydroxy groups. In any embodiment, the hydrocarbon may include a functional group comprising an ethylenically unsaturated group capable of undergoing covalently bonding during a photocuring process.

At least one of $R^2$, $R^6$, $R^8$, and $R^{10}$ may be a group of Formula VI:

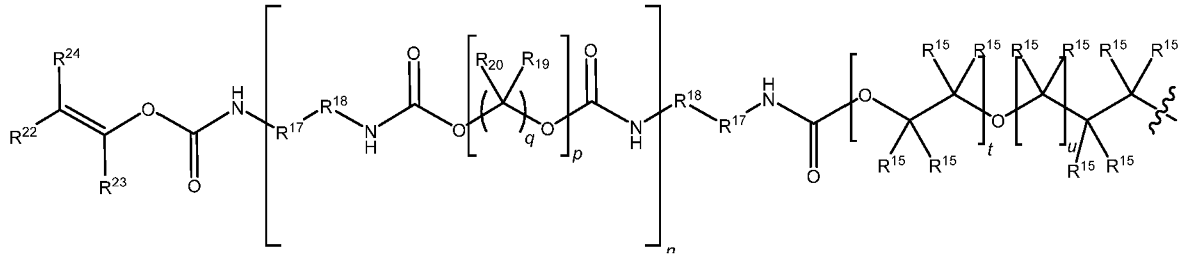

Formula VI

wherein $R^{15}$ may be H or $C_1$-$C_{12}$ hydrocarbon radical; $R^{17}$ at each occurrence may be independently an alkylene, cycloalkylene, or arylene; $R^{18}$ at each occurrence may be independently a bond or $C_1$-$C_3$ alkylene; $R^{19}$ and $R^{20}$ at each occurrence may be independently H, alkyl, or aryl; $R^{22}$, $R^{23}$, and $R^{24}$ may be independently H or alkyl; *n* and *p* may be individually 0 or an integer from 1 to 20; q may be an integer from 1 to 15; *r* may be 0 or an integer from 1 to 40; s may be 0 or an integer from 1 to 100; t may be an integer from 2 to 100; and *u* may be 0 or an integer from 1 to 12. In any embodiment, $r+s+t \geq 3$.

In any embodiment, at least two of $R^2$, $R^6$, $R^8$, and $R^{10}$ may be a a group of Formula VI. In any embodiment, $R^2$ and $R^{10}$ may be Formula VI.

In any embodiment, $R^{17}$ at each occurrence may be independently an $C_5$-$C_{10}$ cycloalkylene or $C_6$-$C_{12}$ arylene. In any embodiment, $R^{18}$ at each occurrence may be independently a bond or $C_1$-$C_3$ alkylene. In any embodiment, $R^{19}$ and $R^{20}$ at each occurrence may be independently H, alkyl, or aryl. In any embodiment, X at each occurrence may be independently -O- or -NH-. In any embodiment, $R^{22}$, $R^{23}$, and $R^{24}$ may be independently H or alkyl. In any embodiment, *n* may be 0 or an integer from 1-10. In any embodiment, p may be an integer from 1-20. In any embodiment, *q* may be an integer from 1-3.

In any embodiment, $R^{15}$ may be H or $C_1$-$C_{12}$ alkyl. In any embodiment, $R^{17}$ at each occurrence may be independently an $C_5$-$C_{10}$ cycloalkylene. In any embodiment, $R^{18}$ at each occurrence may be independently a bond or $C_1$-$C_3$ alkylene. In any embodiment, $R^{19}$ and $R^{20}$ at each occurrence may be independently H, alkyl, or aryl. In any embodiment, X at each occurrence may be independently -O- or -NH-. **In** any embodiment, $R^{22}$, $R^{23}$, and $R^{24}$ may be independently H or $C_1$-$C_6$ alkyl. In any embodiment, n may be 0. In any embodiment, *q* may be an integer from 1-3. In any embodiment, *t* may be an integer from 2-50. In any embodiment, u may be 0 or an integer from 1-6.

In any embodiment, the functionalized siloxane compound may be a compound of Formula IA:

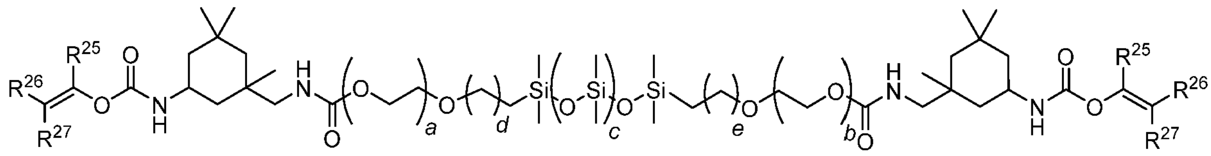

Formula IA

wherein $R^{25}$, $R^{26}$, and $R^{27}$ may be independently H or $C_1$-$C_6$ alkyl; a and *b* may be independently an integer from 6-15; c may be an integer from 10-30; and *d* and *e* may be independently 2 or 3.

In any embodiment, $R^{25}$, $R^{26}$, and $R^{27}$ may be independently H or $C_1$-$C_3$ alkyl. In any embodiment, $R^{25}$, $R^{26}$, and $R^{27}$ may be independently H or $CH_3$. In any embodiment, $R^{26}$ and $R^{27}$ may be H. In any embodiment, $R^{25}$ may be H or $CH_3$.

In any embodiment, *a* and *b* may be independently an integer from 8 to 13. In any embodiment, *a* and *b* may be independently 9, 10, 11, or 12.

In any embodiment, *a* and *b* may be the same. In any embodiment, *a* and *b* may be different.

In any embodiment, *c* may be an integer from 12 to 25. In any embodiment, *c* may be an integer from 15 to 22. In any embodiment, c may be 16, 17, 18, 19, 20, or 21.

In any embodiment, *d* and *e* may each be 2.

In any embodiment, the UV curable coating composition may include about 0.1 wt% to about 5 wt% of the functionalized siloxane compound, based on the total composition. In any embodiment, the UV curable coating composition may include about 0.3 wt% to about 3.5 wt% of the functionalized siloxane compound, based on the total composition. In any embodiment, the UV curable coating composition may include about 0.3 wt% to about 0.7 wt% (including about 0.4 wt% to about 0.6 wt%) of the functionalized siloxane compound, based on the total composition. In any embodiment, the UV curable coating composition may include about 0.5 wt% to about 1.5 wt% (including about 0.75 wt% to about 1.25 wt%) of the functionalized siloxane compound. In any embodiment, the UV curable coating composition may include about 2 wt% to about 4 wt% (including about 2.5 wt% to about 3.5 wt%) of the functionalized siloxane compound,

based on the total composition.

In any embodiment, the ethylenically unsaturated polymerizable compound may include one or more functional groups (*i.e.,* one or more ethylenically unsaturated groups). In any embodiment, the ethylenically unsaturated polymerizable compound may include two or more functional groups (*i.e.,* two or more ethylenically unsaturated groups). In any embodiment, the ethylenically unsaturated polymerizable compound may include one, or more than one, olefinic double bonds.

In any embodiment, the ethylenically unsaturated polymerizable compound may include monomers, oligomers, polymers, or combinations thereof. In any embodiment, various combinations may be used to modify the properties of the coating composition including, but not limited to, viscosity, cure rate, wetting, and/or adhesion. In some embodiments, the ethylenically unsaturated polymerizable compound may have a low molecular weight (monomer or monomeric). In other embodiments, the ethylenically unsaturated polymerizable compound may have a high molecular weight (oligomeric) compounds

In any embodiment, the ethylenically unsaturated polymerizable compound include a crosslinkable diluent function.

In any embodiment, the ethylenically unsaturated polymerizable compound may include hydroxyalkyl (meth) acrylate, acrylonitrile, (meth)acrylamide, N-substituted (meth)acrylamides, vinyl esters, styrene, alkylstyrenes, halostyrenes, N-vinylpyrrolidone, vinyl chloride, vinylidene chloride, monomers containing two, three, or four double bonds, (meth) acrylated epoxy resins, (meth)acrylated polyethers, (meth)acrylated polyurethanes, (meth)acrylated polyesters, esters of ethylenically unsaturated carboxylic acids and polyols or polyepoxides, unsaturated polyesters, polyamides and polyurethanes and co-polymers thereof, polybutadiene and butadiene co-polymers, polyisoprene and isoprene co-polymers, polymers and co-polymers comprising (meth)acrylic group side chains, unsaturated amides, oligomeric polyunsaturated compounds, urethane (meth)acrylate oligomer, (meth)acrylate monomer comprising two, three, or four acrylate groups, or combinatons of two or more thereof.

In any embodiment, the ethylenically unsaturated polymerizable compound may include one double bonds. In any embodiment, the ethylenically unsaturated polymerizable compound may include an alkyl group. In any embodiment, the ethylenically unsaturated polymerizable compound may include a hydroxyl group. In any embodiment, the ethylenically unsaturated polymerizable compound may include oligomeric polyunsaturated compounds such as (meth) acrylated epoxy resins, (meth)acrylated polyethers, (meth)acrylated polyurethanes, (meth)acrylated polyesters, esters of ethylenically unsaturated carboxylic acids and polyols or polyepoxides, unsaturated polyesters, polyamides and polyurethanes and co-polymers thereof, polybutadiene and butadiene co-polymers, polyisoprene and isoprene co-polymers, polymers and co-polymers comprising (meth)acrylic group side chains, unsaturated amides, oligomeric polyunsaturated compounds, urethane (meth)acrylate oligomer, (meth)acrylate monomer comprising two, three, or four acrylate groups, or combinatons of two or more thereof. In any embodiment, the ethylenically unsaturated polymerizable compound may include hydroxyalkyl (meth)acrylates. Non-limiting examples include (meth)acrylate, methyl (meth) acrylate, ethyl (meth)acrylate, butyl (meth)acrylate, 2-ethylhexyl (meth)acrylate, 2-hydroxyethyl (meth)acrylate, isobornyl (meth)acrylate, acrylonitrile, (meth)acrylamide, N-substituted (meth)acrylamides, vinyl esters such as vinyl acetate, vinyl ethers such as isobutyl vinyl ether, styrene, alkylstyrenes, halostyrenes, N-vinylpyrrolidone, vinyl chloride, vinylidene chloride, phenoxyethyl acrylate, 4-t-butylcyclohexyl (meth)acrylate, and combinations of two or more thereof. In any embodiment, the ethylenically unsaturated polymerizable compound may include, but are not limited to, ethylene glycol diacrylate, propylene glycol diacrylate, neopentyl glycol diacrylate, hexamethylene glycol diacrylate, bisphenol A diacrylate, 4,4’-bis(2-acryloyloxyethoxy)diphenylpropane, trimethylolpropane triacrylate, pentaerythritol triacrylate and tetraacrylate, pentaerythritol divinyl ether, vinyl acrylate, divinyl benzene, divinyl succinate, diallyl phthalate, triallyl phosphate, triallyl isocyanurate, tris(2-acryloylethyl)isocyanurate, or a combination of two or more thereof.

In any embodiment, the ethylenically unsaturated polymerizable compound may include unsaturated polyester resins, which may be prepared from maleic acid, phthalic acid and one or more diols and which may have molecular weights of greater than about 500. Unsaturated oligomers of this type are also known as prepolymers.

In any embodiment, the ethylenically unsaturated polymerizable compound may include more than one double bond including, but not limtited to, ethylene glycol diacrylate, propylene glycol diacrylate, neopentyl glycol diacrylate, aliphatic urethane (meth)acrylates, aromatic urethane (meth)acrylates, hexamethylene glycol diacrylate, bisphenol A diacrylate, 4,4’-bis(2-acryloyloxyethoxy)diphenylpropane, trimethylolpropane triacrylate, pentaerythritol triacrylate and tetraacrylate, pentaerythritol divinyl ether, vinyl acrylate, divinyl benzene, divinyl succinate, diallyl phthalate, triallyl phosphate, triallyl isocyanurate, tris(2-acryloylethyl)isocyanurate, or combinations of any two more thereof.

In any embodiment, the ethylenically unsaturated polymerizable compound may include ethylenically unsaturated carboxylic acids and polyols or polyepoxides, and polymers containing ethylenically unsaturated groups in the chain or in side groups, including unsaturated polyesters, polyamides and polyurethanes and co-polymers thereof, polybutadiene and butadiene co-polymers, polyisoprene and isoprene co-polymers, polymers and co-polymers containing (meth) acrylic groups in side-chains, as well as combinations of more than one such polymer.

In any embodiment, the ethylenically unsaturated polymerizable compound may include trimethylolethane

triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, dipentaerythritol diacrylate, dipentaerythritol triacrylate, dipentaerythritol tetraacrylate, dipentaerythritol pentacrylate, dipentaerythritol hexacrylate, tripentaerythrtol octacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentacrylate, sorbitol hexacrylate, oligoester acrylates and methacrylates, glycerol di- and-triacrylate, 1,4-cyclohexanediacrylate, bisacrylates and bismethacrylates of polyethylene glycol having molecular weights of 200 to 1500, 1,3-butylene glycol diacrylate, 1,4-butanediol diacrylate, 1,6-hexanediol diacrylate, 1,6-hexanediol monoacrylate monomethacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated (10) bisphenol A diacrylate, ethoxylated (3) bisphenol A diacrylate, ethoxylated (30) bisphenol A diacrylate, ethoxylated (4) bisphenol A diacrylate, hydroxypivalaldehyde modified trimethylolpropane diacrylate, neopentyl glycol diacrylate, polyethylene glycol (200) diacrylate, polyethylene glycol (400) diacrylate, polyethylene glycol (600) diacrylate, propoxylated neopentyl glycol diacrylate, tetraethylene glycol diacrylate, tricyclodecanedimethanol diacrylate, triethylene glycol diacrylate, tripropylene glycol diacrylate, or combinations of any two or more thereof.

In any embodiment, the ethylenically unsaturated polymerizable compound may include unsaturated carboxylic acids component such as (meth)acrylic acid, crotonic acid, itaconic acid, cinnamic acid, unsaturated fatty acids such as linolenic acid or oleic acid, or combinations of two or more thereof.

In any embodiment, the ethylenically unsaturated polymerizable compound may include a tri(meth)acryl containing compound such as, but not limited to, glycerol triacrylate, trimethylolpropane triacrylate, ethoxylated triacrylates (for example, ethoxylated (3) trimethylolpropane triacrylate, ethoxylated (6) trimethylolpropane triacrylate, ethoxylated (9) trimethylolpropane triacrylate, ethoxylated (20) trimethylolpropane triacrylate), pentaerythritol triacrylate, propoxylated triacrylates (for example, propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate, pentaerythritol triacrylate, tris(2-hydroxyethyl)isocyanurate triacrylate, or combinations of any two or more thereof.

In any embodiment, the ethylenically unsaturated polymerizable compound may include pentaerythritol divinyl ether, vinyl methacrylate, divinyl benzene, divinyl succinate, diallyl phthalate, triallyl phosphate, triallyl isocyanurate, tris(2-acryloylethyl)isocyanurate, ethylene glycol diacrylate, propylene glycol diacrylate, neopentyl glycol diacrylate, hexamethylene glycol diacrylate, bisphenol A diacrylate, trimethylolpropane triacrylate, propyleneglycol diacrylate, hexanediol diacrylate, tripropyleneglycol diacrylate, trimethylolpropane triacrylate, urethane methacrylate oligomers, urethane acrylate oligomers, or combinations of any two or more thereof. In any embodiment, the ethylenically unsaturated polymerizable compound may include ethylene glycol diacrylate, propylene glycol diacrylate, neopentyl glycol diacrylate, hexamethylene glycol diacrylate, bisphenol A diacrylate, trimethylolpropane triacrylate, propyleneglycol diacrylate, hexanediol diacrylate, tripropyleneglycol diacrylate, trimethylolpropane triacrylate, urethane methacrylate oligomers, urethane acrylate oligomers, or combinations of any two or more thereof.

In any embodiment, the ethylenically unsaturated polymerizable compound may include a polyol(s). In any embodiment, the polyol(s) may include aromatic, aliphatic, epoxide, and/or cycloaliphatic polyols. In any embodiment, aromatic polyols may include, but are not limited to, hydroquinone, 4,4'-dihydroxydiphenyl, 2,2-bis(4-hydroxyphenyl) propane, novolacs, and/or cresols. In any embodiment, polyepoxides may include those based on the polyols, e.g., aromatic polyols and epichlorohydrin. In any embodiment, the polyols may include polymers and co-polymers which contain hydroxyl groups in the polymer chain or in side group(s) including, but not limited to, polyvinyl alcohol and co-polymers thereof or hydroxyalkyl polymethacrylates or co-polymers thereof. Other suitable polyols are oligoesters carrying hydroxyl end groups.

In any embodiment, the ethylenically unsaturated polymerizable compound may include aliphatic and/or cycloaliphatic polyols are alkylenediols containing for example 2 to 12 carbon atoms. In any embodiment, the ethylenically unsaturated polymerizable compound may include ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols (*e.g.*, having molecular weights for instance of 200-1500 g/mol), 1,3-cyclopentanediol, 1,2-, 1,3-, or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol, and/or sorbitol. In any embodiment, the polyols may be esterified partially or completely with one or with different unsaturated carboxylic acids, in which case the free hydroxyl groups of the partial esters may be modified, for example etherified, or esterified with other carboxylic acids.

In any embodiment, the ethylenically unsaturated polymerizable compound may include an ester functionality. In any embodiment, the ethylenically unsaturated polymerizable compound may include trimethylolpropane triacrylate,

trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentacrylate, dipentaerythritol hexacrylate, tripentaerythrtol octacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentacrylate, sorbitol hexacrylate, oligoester acrylates and methacrylates, glycerol di- and-triacrylate, 1,4-cyclohexanediacrylate, bisacrylates and bismethacrylates of polyethylene glycol (e.g., having molecular weights of 200-1500 g/mol), or combinations of any two or more thereof.

In any embodiment, the ethylenically unsaturated polymerizable compound may include amides of identical or different unsaturated carboxylic acids of aromatic, cycloaliphatic and aliphatic polyamines containing for instance 2 to 6, for example 2 to 4, amino groups. Non-limiting examples of such polyamines include ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diaminocyclohexane, isophoronediamine, phenylenediamine, bisphenylenediamine, bis(β-aminoethyl)ether, diethylenetriamine, triethylenetetramine, bis(quadrature-aminoethoxy)ethane and/or bis(β-aminopropoxy)ethane. Other suitable polyamines are polymers and co-polymers which may contain additional amino groups in the side-chain and oligoamides containing amino end groups. Illustrative unsaturated amides include, but are not limited to, methylenebisacrylamide, 1,6-hexamethylenebisacrylamide, diethylenetriaminetrismethacrylamide, bis(methacrylamidopropoxy)ethane, β-methacrylamidoethylmethacrylate, N-[(β-hydroxyethoxy)ethyl]acrylamide, or combinations of two or more thereof.

In any embodiment, the ethylenically unsaturated polymerizable compound may include unsaturated polyesters and/or polyamides components including those derived from maleic acid and diols or diamines. Maleic acid may be partially replaced by other dicarboxylic acids such as fumaric acid, itaconic acid, citraconic acid, mesaconic acid or chloromaleic acid. To control the reactivity of the polyester and to influence the crosslinking density and hence the product properties, it is possible to use in addition to the unsaturated dicarboxylic acids different amounts of saturated dicarboxylic acids such as phthalic acid, isophthalic acid, terephthalic acid, tetrahydrophthalic acid, succinic acid, or adipic acid. The unsaturated polyesters may be used together with ethylenically unsaturated comonomers such as styrene. The polyesters and polyamides can also be derived from dicarboxylic acids and ethylenically unsaturated diols or diamines, especially from those with long chains containing typically from 6 to 20 carbon atoms. Polyurethanes are typically those derived from saturated or unsaturated diisocyanates and unsaturated and saturated diols.

In any embodiment, the ethylenically unsaturated polymerizable compound may include polyester (meth) acrylates and/or (meth)acrylated polyesters. In any embodiment, the polyester (meth)acrylates and/or (meth)acrylated polyesters may be obtained by reacting oligomers, typically epoxides, urethanes, polyethers, and/or polyesters, with (meth)acrylates such as hydroxyethyl (meth)acrylate or hydroxypropyl (meth)acrylate.

In any embodiment, the ethylenically unsaturated polymerizable compound may include polybutadiene, polyisoprene, or co-polymers thereof. In any embodiment, suitable comonomers include olefins such as ethylene, propene, butene, hexene, (meth)acrylates, acrylonitrile, styrene and/or vinyl chloride. In any embodiment, the ethylenically unsaturated polymerizable compound may include (meth)acrylate groups in the side-chain. They may be reaction products of epoxy resins based on novolak with (meth)acrylic acid, homo- or co-polymers of polyvinyl alcohol or their hydroxyalkyl derivatives which are esterified with (meth)acrylic acid or homo- and co-polymers of (meth)acrylates which are esterified with hydroxyalkyl(meth)acrylates.

In any embodiment, the ethylenically unsaturated polymerizable compound may include monomers component such as alkyl- or hydroxyalkyl (meth)acrylates, styrene, ethylene glycol diacrylate, propylene glycol diacrylate, neopentyl glycol diacrylate, hexamethylene glycol diacrylate or bisphenol A diacrylate, 4,4'-bis(2-acryloyloxyethoxy)diphenylpropane, trimethylolpropane triacrylate, pentaerythritol triacrylate or tetraacrylate, for instance acrylates, styrene, hexamethylene glycol or bisphenol A diacrylate, 4,4'-bis(2-acryloyloxyethoxy)diphenylpropane, and/or trimethylolpropane triacrylate.

In any embodiment, the ethylenically unsaturated polymerizable compound may include oligomeric polyunsaturated compounds such as polyester (meth)acrylates or unsaturated polyester resins which may be prepared from maleic acid, fumaric acid, phthalic acid and one or more than one diol, and which may have molecular weights from about 500-3000 g/mol. In any embodiment, the ethylenically unsaturated polymerizable compound may include unsaturated carboxylic acids such as (meth)acrylic acid.

In any embodiment, the ethylenically unsaturated polymerizable compound may include one or more urethane (meth)acrylate oligomer(s). In any embodiment, the urethane (meth)acrylate oligomer may include two or more (meth) acrylate groups.

In any embodiment, the ethylenically unsaturated polymerizable compound may include oligomeric urethane

(meth)acrylate. In any embodiment, the oligomeric urethane (meth)acrylate may be prepared by reacting an alkylene or aromatic diisocyanate of the Formula OCN-$R_{403}$-NCO with a polyol. In any embodiment, the polyol may be a diol of the Formula HO-$R_{400}$-OH, wherein $R_{403}$ is a $C_{2-100}$ alkylene or an arylene group and $R_{400}$ is a $C_{2-100}$ alkylene or alkoxy group. The urethane diol diisocyanate intermediate product may then subsequently undergo reaction with a hydroxyalkyl (meth) acrylate. In any embodiment, suitable diisocyanates may include alkylene diisocyanates such as 2,2,4-trimethylhexylene diisocyanate. In any embodiment, the urethane (meth)acrylate oligomer may be aliphatic.

In any embodiment, the ethylenically unsaturated polymerizable compound may include the urethane (meth) acrylate oligomer provided herein and may further include at least one multi(meth)acrylate monomer comprising three or four (meth)acrylate groups. Without wishing to be bound by theory, it is believd the multi(meth)acrylate monomer may increase the crosslinking density and thereby contribute the durability and abrasion resistance to the photocured coating.

In any embodiment, the ethylenically unsaturated polymerizable compound may include a tri(meth)acryl containing compound including, but are not limited to, glycerol triacrylate, trimethylolpropane triacrylate, ethoxylated triacrylates (for example, ethoxylated (3) trimethylolpropane triacrylate, ethoxylated (6) trimethylolpropane triacrylate, ethoxylated (9) trimethylolpropane triacrylate, ethoxylated (20) trimethylolpropane triacrylate), pentaerythritol triacrylate, propoxylated triacrylates (for example, propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate, pentaerythritol triacrylate, and/or tris(2-hydroxyethyl)isocyanurate triacrylate. Higher functionality (meth)acryl containing compounds include ditrimethylolpropane tetraacrylate, ethoxylated (4) pentaerythritol tetraacrylate, and/or pentaerythritol tetraacrylate.

In any embodiment, the ethylenically unsaturated polymerizable compound may include one or more di(meth) acryl containing compounds. Non-limiting examples include 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated (10) bisphenol A diacrylate, ethoxylated (3) bisphenol A diacrylate, ethoxylated (30) bisphenol A diacrylate, ethoxylated (4) bisphenol A diacrylate, hydroxypivalaldehyde modified trimethylolpropane diacrylate, neopentyl glycol diacrylate, polyethylene glycol (200) diacrylate, polyethylene glycol (400) diacrylate, polyethylene glycol (600) diacrylate, propoxylated neopentyl glycol diacrylate, tetraethylene glycol diacrylate, tricyclodecanedimethanol diacrylate, triethylene glycol diacrylate, and/or tripropylene glycol diacrylate.

In any embodiment, the ethylenically unsaturated polymerizable compound may include (meth)acrylate functionality, vinyl functionality, vinyl ether functionality, (meth)allyl ether functionality, or combinations of two or more thereof.

In any embodiment, the ethylenically unsaturated polymerizable compound may include (meth)acrylate monomers. (Meth)acrylate monomers include, but are not limited to, isobornyl (meth)acrylate, isodecyl (meth)acrylate, phenoxyethyl (meth)acrylate, trimethylolpropane tri(meth)acrylate, trimethylolpropane ethoxylate tri(meth)acrylate, tripropylene glycol di(meth)acrylate, hexanediol di(meth)acrylate, tetrahydrofurfuryl (meth)acrylate, beta-carboxyethyl (meth)acrylate, bisphenol A ethoxylate di(meth)acrylate, ethoxylated and propoxylated neopentyl glycol di(meth)acrylates, di-(trimethyolpropane tetra (meth)acrylate), pentaerythritol tri(meth)acrylate, pentaerythritol tetra(meth)acrylate, or combinations of two or more thereof. In any embodiment, the ethylenically unsaturated polymerizable compound may include, but are not limited to, tripropylene glycol diacrylate (TPGDA) (available from Sartomer Corp., Exton, Pa. under the trade designation SR 306), 1, 6 hexanediol diacrylate (HDDA) (available from Sartomer under the trade designation SR 238), and/or trimethylolpropane triacrylate (TMPTA) (available from Sartomer under the trade designation SR 351).

In any embodiment, the ethylenically unsaturated polymerizable compound may include an allyl ether. In any embodiment, the allyl ether functional groups of the allyl ether monomers may be bonded to a core structural group which is based on a wide variety of polyhydric alcohols. In any embodiment, the ethylenically unsaturated polymerizable compound may include polyhydric alcohols such as, but not limited to, neopentyl glycol, trimethylolpropane, ethylene glycol, propylene glycol, butylene glycol, diethylene glycol, trimethylene glycol, triethylene glycol, trimethylolethane, pentaerythritol, glycerol, diglycerol, 1,4-butanediol, 1,6-hexanediol, 1,4-cyclohexanedimethanol, and the like, or combinations of two or more thereof.

In any embodiment, the ethylenically unsaturated polymerizable compound may include hydroxyethyl allyl ether, hydroxypropyl allyl ether, trimethylolpropane monoallyl ether, trimethylolpropane diallyl ether, trimethylolethane monoallyl ether, trimethylolethane diallyl ether, glycerol monoallyl ether, glycerol diallyl ether, pentaerythritol monoallyl ether, pentaerythritol diallyl ether, pentaerythritol triallyl ether, 1,2,6-hexanetriol monoallyl ether, 1,2,6-hexanetriol diallyl ether, and the like, , or combinations of two or more thereof. Propoxylated and ethoxylated forms of these compounds are also suitable.

In any embodiment, the ethylenically unsaturated polymerizable compound may include a vinyl ether. In any embodiment, vinyl ether monomers include 4-hydroxybutyl vinyl ether, 1,4-cyclohexanedimethanol monovinyl ether, 1,4-cyclohexanedimethanol divinyl ether, ethylene glycol monovinyl ether, ethylene glycol divinyl ether, diethylene glycol

monovinyl ether, diethylene glycol divinyl ether, triethylene glycol divinyl ether, and the like, or combinations of two or more thereof. Propoxylated and ethoxylated forms of these compounds are also suitable.

In any embodiment, the ethylenically unsaturated polymerizable compound may include urethane (meth) acrylate oligomers that may be employed in the UV curable coating composition are available from SARTOMER Company (Exton, Pa.) under the trade designation CN981B88 and CN991. CN981B88 is described as an aliphatic urethane (meth) acrylate oligomer available from SARTOMER Company under the trade designation CN981 blended with SR238 (1,6 hexanediol diacrylate).

In any embodiment, the ethylenically unsaturated polymerizable compound may include less than about 40 wt%, 30 wt%, 20 wt%, 10 wt%, 5 wt%, or 3 wt% of a (meth)acrylate monomer having greater than four (meth)acrylate groups, based on the total solids of composition. In any embodiment, the ethylenically unsaturated polymerizable compound may be substantially free (*i.e.,* less than 2 wt%, less than 1 wt%, less than 0.5 wt%, or less than 0.1 wt%) of a (meth)acrylate monomer having greater than four (meth)acrylate groups.

In any embodiment, the UV curable coating composition may include about 20 wt% to about 80 wt% of the ethylenically unsaturated polymerizable compound, based on the total composition. In any embodiment, the UV curable coating composition may include about 20 wt% to about 70 wt% of the ethylenically unsaturated polymerizable compound, based on the total composition. In any embodiment, the UV curable coating composition may include about 30 wt% to about 70 wt% of the ethylenically unsaturated polymerizable compound, based on the total composition. In any embodiment, the UV curable coating composition may include about 40 wt% to about 60 wt% of the ethylenically unsaturated polymerizable compound, based on the total composition. In any embodiment, the UV curable coating composition may include about 40 wt% to about 55 wt% of the ethylenically unsaturated polymerizable compound, based on the total composition.

In any embodiment, the ethylenically unsaturated polymerizable compound may contribute to the conformability and flexibility of the cured coating.

In any embodiment, binders may be added to the ethylenically unsaturated polymerizable compound. Binders may be used when the ethylenically unsaturated polymerizable compound is a liquid or viscous substance. The amount of binder may be from about 5 wt% to about 50 wt%, based upon the total composition (including from about 10 wt% to about 50 wt% or from about 20 wt% to about 50 wt%). The choice of binder will depend on the field of use and the desired properties therefore, such as the ability of the compositions to be developed in aqueous and organic solvent systems, adhesion to substrates and susceptibility to oxygen.

Suitable binders are typically polymers having a molecular weight of about 5,000 to 2,000,000, for instance 10,000 to 1,000,000. Illustrative examples include, but are not limited to, homopolymers and co-polymers of acrylates and methacrylates, including co-polymers of methyl methacrylate/ethyl acrylate/methacrylic acid, poly(alkylmethacrylates), poly(alkylacrylates); cellulose esters and ethers such as cellulose acetate, cellulose acetobutyrate, methyl cellulose, ethyl cellulose; polyvinyl butyral, polyvinyl formal, cyclized rubber, polyethers such as polyethylene oxide, polypropylene oxide, polytetrahydrofuran; polystyrene, polycarbonate, polyurethane, chlorinated polyolefins, polyvinyl chloride, co-polymers of vinyl chloride/vinylidene chloride, co-polymers of vinylidene chloride with acrylonitrile, methyl methacrylate and vinyl acetate, polyvinyl acetate, co-poly(ethylene/vinyl acetate), polymers such as polycaprolactam and poly(hexamethylene adipamide), polyesters such as poly(ethylene glycol terephthalate) and poly(hexamethylene glycol succinate).

In any embodiment, the ethylenically unsaturated polymerizable compound may also be used in an admixture with non-photopolymerizable film-forming components. These components may be physically drying polymers or solutions thereof in organic solvents, for example nitrocellulose or cellulose acetobutyrate. The ethylenically unsaturated polymerizable compound may be a component of a free radical-ionic curable blend, such as a free radical-cationic curable blend. Without being bound by theory, it is believed that the ethylenically unsaturated polymerizable compound acts as crosslinking agent that renders the photocured film insoluble. The mono-unsaturated monomer acts as a reactive diluent with the aid of which the viscosity is lowered without having to use a solvent. Moreover, properties of the cured composition such as curing rate, crosslinking density and surface properties are dependent on the choice of monomer. Unsaturated polyester resins are usually used in two-component systems, together with a mono-unsaturated monomer, for example with styrene.

In addition to the functionalized siloxane compounds and the ethylenically unsaturated compounds described the above, the UV curable coating compositions described herein may include a silicone compound to enhance the surface properties of the cured coating made from the composition, particularly mar resistance and ink resistance. Suitable silicone compounds include non-reactive and reactive functionalized silicones. Functionalized silicones are preferred. While not wishing to be bound by theory, presently available evidence indicates that when the coating compositions are cured, the functionalized silicones become an embedded permanent part of the crosslinked structure of the cured film, which not only enhances crosslink density, but also distributes silicone throughout the film. Since the silicone material is not confined to the surface of the film, the resulting coating resists penetration and permanent staining caused by inks, colorants and the like.

Suitable reactive silicones include, but are not limited to, (meth)acrylic functional polyester modified polydimethylsiloxane, (meth)acrylic functional polycarbonate modified polydimethylsiloxane, (meth)acrylic functional polyethylene glycol modified polydimethylsiloxane, (meth)acrylic functional polypropylene glycol modified polydimethylsiloxane, (meth)acrylic functional polyether modified hydroxyl functional polydimethylsiloxane, epoxy functional siloxane, and amine functional siloxane. Examples include crosslinkable (meth)acryl functional silicone compounds available under the trade designation TEGO RAD from Evonik Industries, Parsippany, N.J., particularly TEGO RAD 2650. Another example is a silicone diacrylate available under the trade designation EBECRYL 350 from Cytec Surface Specialties of Dragenbos, Belgium. Yet another example is a reactive silicone surface additive available under the trade designation BYK from BYK Chemie, Wessel, Germany, particularly acryl-functional silicones such as, for example, BYK 371, a polydimethylsiloxane modified with an acrylfunctional polyester.

In a preferred embodiment, the UV curable coating composition further includes a micronized inorganic particle(s).

In any embodiment, the micronized inorganic particle(s) may add mechanical strength, scratch resistance, and/or durability to the resultant cured coating. In any embodiment, the micronized inorganic particle(s) may include zirconia (includes zirconia metal oxide), silica, titania, antimony oxides, alumina, tin oxides, or combinations of two or more thereof. In any embodiment, the micronized inorganic particle(s) may include silica.

In any embodiment, the micronized inorganic particle(s) may have a mean diameter from about 1 nm to about 500 nm. In any embodiment, the micronized inorganic particle(s) may have a mean diameter from about 5 nm to about 250 nm. In any embodiment, the micronized inorganic particle(s) may have a mean diameter from about 5 nm to about 200 nm. In any embodiment, the micronized inorganic particle(s) may have a mean diameter from about 5 nm to about 125 nm.

In any embodiment, the micronized inorganic particle(s) may include commercially available silica micronized inorganic particles such as those available from NALCO CHEMICAL CO. (Naperville, Ill.) under the product designation NALCO COLLOIDAL SILICAS. For example, silicas include NALCO products 1040, 1042, 1050, 1060, 2327 and 2329. Useful zirconia micronized inorganic particles are commercially available from Nalco Chemical Co. (Naperville, Ill.) under the product designation NALCO OOSSOO8.

In any embodiment, the micronized inorganic particle(s) may include various high refractive index inorganic oxide micronized inorganic particles may be employed such as for example zirconia ("$ZrO_2$"), titania ("$TiO_2$"), antimony oxides, alumina, tin oxides, alone or in combination of any two or more such materials. Mixed metal oxides may also be employed. Zirconias for use in the high refractive index layer are available from NALCO CHEMICAL CO. under the trade designation "Nalco OOSSOO8" and from Buhler AG Uzwil, Switzerland under the trade designation "Buhler zirconia Z-WO sol." Zirconia micronized inorganic particles may also be prepared as described in U.S. Pat. Nos. 7,241,437 and 6,376,590.

In any embodiment, the micronized inorganic particle(s) may micronized inorganic particle(s) that have been surface treated or surface modified. The surface-treatment may stabilize the micronized inorganic particles so that the particles will be well dispersed in the UV curable coating composition and result in a substantially homogeneous composition. Furthermore, the micronized inorganic particles may be modified over at least a portion of its surface with a surface treatment agent so that the stabilized particle can copolymerize or react with the UV curable coating layer resin during curing.

In any embodiment, the UV curable coating composition may include about 5 wt% to about 70 wt% of the micronized inorganic particle(s), based on the total composition. In any embodiment, the UV curable coating composition may include about 8 wt% to about 60 wt% of the micronized inorganic particle(s), based on the total composition. In any embodiment, the UV curable coating composition may include about 10 wt% to about 50 wt% of the micronized inorganic particle(s), based on the total composition. In any embodiment, the UV curable coating composition may include about 15 wt% to about 40 wt% of the micronized inorganic particle(s), based on the total composition. In any embodiment, the UV curable coating composition may include about 20 wt% to about 30 wt% of the micronized inorganic particle(s), based on the total composition. In any embodiment, the micronized inorganic particles may be present in an amount from about 10 to about 200 parts per 100 parts of coating layer monomer. Additionally, micronized inorganic particles may be present in amounts from about 5 wt% to about 50 wt% (including about 10 wt% to about 50 wt% and about 25 wt% to about 50 wt%) relative to the UV curable monomers.

In any embodiment, the UV curable coating composition may further include a photoinitiator(s), hindered amine light stabilizer(s), ultraviolet light absorber(s), antioxidant(s), or a combination of two or more thereof.

In any embodiment, the curable coating composition is preferably radiation curable. In any embodiment, the composition may be cured via visible light, electron beam, thermal initiation, and/or cationic initiation. In any embodiment, the composition may include polymer(s) that are curable by UV or visible light. In any embodiment, the composition may include a free-radical initiator, particularly a photoinitiator that induces the curing reaction upon exposure to light.

In any embodiment, the composition may include at least about 0.1 wt % of a photoinitiator(s), based on the total weight of the composition. In any embodiment, the composition may include no more than about 10 wt % of a photoinitiator(s), based on the total weight of the composition. In any embodiment, the composition may include about 0.1 wt% to about 10 wt % of a photoinitiator(s), based on the total weight of the composition. In any embodiment, the

composition may include about 0.1 wt% to about 10 wt % of a photoinitiator(s), based on the total weight of the composition. In any embodiment, the composition may include about 0.1 wt% to about 5 wt % of a photoinitiator(s), based on the total weight of the composition.

Among photoinitiators suitable for use in the present invention with resins having (meth)acrylate or allyl ether functional groups are alpha-cleavage type photoinitiators and hydrogen abstraction-type photoinitiators. The photoinitiator may include other agents such as a coinitiator or photoinitiator synergist that aid the photochemical initiation reaction. Suitable cleavage type photoinitiators include alpha, alpha-diethoxyacetophenone (DEAP), dimethoxyphenylacetophenone (commercially available under the trade designation IRGACURE 651 from Ciba Corp., Ardsley, N.Y.), hydroxycyclo-hexylphenylketone (commercially available under the trade designation IRGACURE 184 from Ciba Corp.), 2-hydroxy-2-methyl-1-phenylpropan-1-one (commercially available under the trade designation DAROCUR 1173 from Ciba Corp.), a 25:75 blend of bis-(2,6-dimethoxybenzoyl)-2,4,4-trimethylpentyl phosphine oxide and 2-hydroxy-2-methyl-1-phenylpropan-1-one (commercially available under the trade designation IRGACURE 1700 from Ciba Corp.), a 50:50 blend of 2-hydroxy-2-methyl-1-phenylpropan-1-one and 2,4,6-trimethylbenzoyl-diphenylphosphine oxide (TPO, commercially available under the trade designation DAROCUR 4265 from Ciba Corp.), phosphine oxide, 2,4,6-trimethyl benzoyl (commercially available under the trade name IRGACURE 819 and IRGACURE 819DW from Ciba Corp.), 2,4,6-trimethylbenzoyl-diphenylphosphine oxide (commercially available under the trade designation LUCIRIN from BASF Corp., Mount Olive, N.J.), and a mixture of 70% oligo 2-hydroxy-2-methyl-4-(1-methylvinyl)phenylpropan-1-one and 30% 2-hydroxy-2-methyl-1-phenylpropan-1-one) (commercially available under the trade designation KIP 100 from Sartomer, Exton, Pa.), and aromatic ketones such as the compounds available under the trade designation TINOCURE from Ciba Corp. Suitable hydrogen abstraction-type photoinitiators include benzophenone, substituted benzophenones (such as that commercially available under the trade designation ESCACURE TZT from Fratelli-Lamberti), and other diaryl ketones such as xanthones, thioxanthones, Michler's ketone, benzyl, quinones, and substituted derivatives of all of the above. Preferred photoinitiators include DAROCUR 1173, KIP 100, benzophenone, IRGACURE 184 and TINOCURE.

Illustrative alpha-hydroxy ketone and bisacylphosphine oxide photoinitiators of component d) may include, but are not limited to, those disclosed in U.S. Pat. Nos. 5,942,290, 5,534,559 and 6,020,528.

In any embodiment, alpha-hydroxy ketone photoinitiators include compounds represented by the Formulas

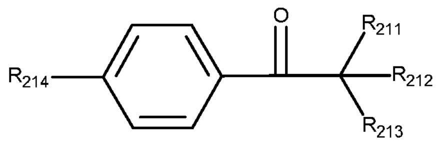

or

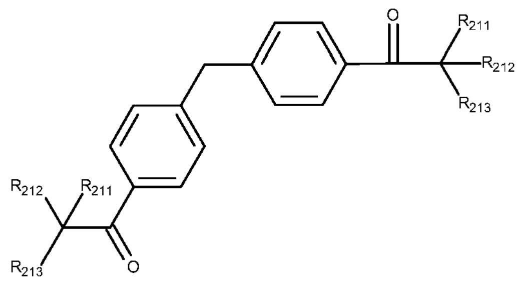

In any embodiment, $R_{211}$ and $R_{212}$ independently of one another are hydrogen, $C_1$-$C_6$ alkyl, phenyl, $C_1$-$C_6$ alkoxy, $OSiR_{216}(R_{217})_2$ or $-O(CH_2CH_2O)_q$-$C_1$-$C_6$ alkyl, or $R_{211}$ and $R_{212}$, together with the carbon atom to which they are attached, form a cyclohexyl ring; q is a number from 1 to 20; $R_{213}$ is OH, $C_1$-$C_{16}$ alkoxy or $-O(CH_2CH_2O)_q$-$C_1$-$C_8$ alkyl; $R_{214}$ is hydrogen, $C_1$-$C_{18}$ alkyl, $C_1$-$C_{18}$ alkoxy, $-OCH_2CH_2-OR_{215}$, or $CH_2=C(CH_3)-$; $R_{215}$ is hydrogen, $-COCH=CH_2$ or $--COC(CH_3)=CH_2$; and $R_{216}$ and $R_{217}$ independently of one another are $C_1$-$C_8$ alkyl or phenyl.

Some illustrative alpha-hydroxy ketone photoinitiators include those in which $R_{211}$ and $R_{212}$ independently of one another are hydrogen, $C_1$-$C_6$ alkyl or phenyl or $R_{211}$ and $R_{212}$, together with the carbon atom to which they are attached, form a cyclohexyl ring; $R_{213}$ is OH; and $R_{214}$ is hydrogen, $C_1$-$C_{12}$ alkyl, $C_1$-$C_{12}$ alkoxy, $--OCH_2CH_2OR_{215}$, or $--C(CH_3)=CH_2$. For example, $R_{211}$ and $R_{212}$ may be, independently of one another, methyl or ethyl or $R_{211}$ and $R_{212}$, together with the carbon atom to which they are attached, form a cyclohexyl ring; $R_{213}$ is hydrogen and $R_{214}$ is hydrogen, $C_1$-$C_4$ alkyl, $C_1$-$C_4$ alkoxy or $--OCH_2CH_2OH$. Illustrative alpha-hydroxy ketone photoinitiators may include, but are not limited to alpha-hydroxycyclohexyl phenyl ketone; 2-hydroxy-1-(4-(4-(2-hydroxy-2-methylpropionyl)benzyl)phenyl-2-methylpropan-1-one; 2-hydroxy-2-methyl-1-phenylpropanone; 2-hydroxy-2-methyl-1-(4-isopropylphenyl)propanone ; oligo (2-hydroxy-2-methyl-1-(4-(1-methylvinyl)phenyl)propanone; CAS number 163702-01-0; 2-hydroxy-2-methyl-1-(4-dodecylphenyl)propanone; and 2-hydroxy-2-methyl-1-[(2-hydroxyethoxy)phenyl]propanone.

Illustrative bisacylphosphine oxide photoinitiators component d) ii) may be represented as the following formula:

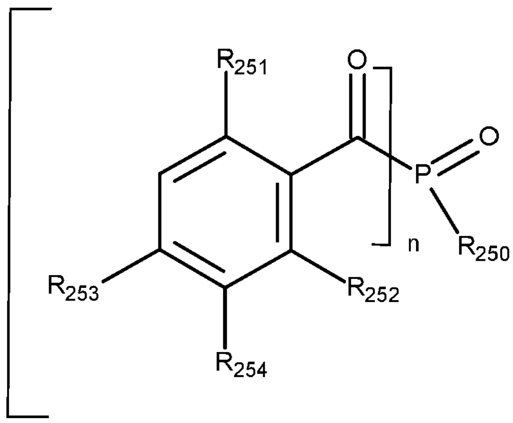

wherein $R_{250}$ is $C_1$-$C_{12}$ alkyl, cyclohexyl or phenyl which is unsubstituted or is substituted by 1 to 4 halogen or $C_1$-$C_8$ alkyl; n is 1 or 2; when n is 1, then the phosphorus atom is further substituted by $C_1$-$C_{12}$ alkoxy; $R_{251}$ and $R_{252}$ are each independently of the other hydrogen, $C_1$-$C_8$ alkyl, or $C_1$-$C_8$ alkoxy; $R_{253}$ is hydrogen or $C_1$-$C_8$ alkyl; and $R_{254}$ is hydrogen or methyl. In some embodiments, $R_{250}$ may be $C_2$-$C_{10}$ alkyl, cyclohexyl or phenyl which is unsubstituted or is substituted by 1 to 4 $C_1$-$C_4$ alkyl, Cl or Br. In some embodiments, $R_{250}$ may be $C_3$-$C_8$ alkyl, cyclohexyl or phenyl which is unsubstituted or is substituted in the 2-, 3-, 4- or 2,5-positions by $C_1$-$C_4$ alkyl. In some embodiments, $R_{250}$ may be $C_4$-$C_{12}$ alkyl or cyclohexyl, $R_{251}$ and $R_{252}$ are each independently of the other $C_1$-$C_8$ alkyl or $C_1$-$C_8$ alkoxy and $R_{253}$ is hydrogen or $C_1$-$C_8$ alkyl. In some embodiments, $R_{251}$ and $R_{252}$ may be $C_1$-$C_4$ alkyl and $R_{253}$ is hydrogen or $C_1$-$C_4$ alkyl. In some embodiments, $R_{251}$ and $R_{252}$ may be $C_1$-$C_4$ alkoxy and $R_{253}$ is hydrogen or $C_1$-$C_4$ alkyl. In some embodiments, $R_{251}$ and $R_{252}$ may be methyl and $R_{253}$ may be hydrogen or methyl. In some embodiments, $R_{251}$, $R_{252}$ and $R_{253}$ are all methyl. In some embodiments, $R_{251}$, $R_{252}$ and $R_{253}$ are methyl and $R_{254}$ is hydrogen. In some embodiments, $R_{251}$ and $R_{252}$ are methoxy, $R_{253}$ and $R_{254}$ is hydrogen. In some embodiments, $R_{250}$ is $C_3$-$C_8$ alkyl. In some embodiments, $R_{250}$ is isobutyl or isooctyl. In some embodiments, $R_{250}$ is phenyl.

Illustrative bisacylphosphine oxide photoinitiators include, but are not limited to, bis(2,4,6-trimethylbenzoyl)-phenylphosphine oxide; 2,4,6-trimethylbenzoyldiphenylphosphine oxide; 2,4,6-trimethylbenzoylphenyl phosphinate; ethyl (2,4,6-trimethylbenzoyl) phenylphosphinate and bis(2,6-dimethoxybenzoyl)-2,4,4-trimethylpentylphosphine oxide.

The alpha-hydroxy ketone photoinitiators of component d) i) may be present in the photocured coating coating compositions from about 0.5% to about 7% by weight, based on the weight of the UV curable coating coating composition. This includes from about 0.5% to about 2%, from about 1% to about 3% from about 1% to about 4%, from about 1% to about 5%, or from about 1% to about 6% by weight, based on the weight of the UV curable coating coating. In some embodiments, the alpha-hydroxy ketone photoinitiators may be present from about 2% to about 7%, from about 3% to about 7%, from about 4% to about 7%, from about 5% to about 7%, or from about 6% to about 7% by weight, based on the weight of the UV curable coating coating composition. In other embodiments, the alpha-hydroxy ketone photoinitiators may be present from about 2% to about 6% by weight, or from about 3% to about 5% by weight, based on the weight of the UV curable coating coating composition.

The bisacylphosphine oxide photoinitiators of component d) ii) may be present from about 0.1% to about 3% by weight, based on the weight of the UV curable coating coating composition. This includes from about 0.1% to about 1.5%, from about 0.1% to about 1%, or from about 0.1% to about 0.5% by weight, based on the weight of the UV curable coating coating. In some embodimetns, the present bisacylphosphine oxide photoinitiators is present from about 0.2% to 2%, from about 0.5% to about 2%, or from about 0.7% to about 2% by weight, based on the weight of the UV curable coating coating composition. In other embodiments, the bisacylphosphine oxide photoinitator is present from about 0.2% to about 1.5%, or from about 0.5 to about 1% by weight, based on the weight of the UV curable coating coating composition. The alpha-hydroxy ketone photoinitiator may be, for example, used in excess of the bisacylphosphine oxide photoinitiator.

A weight ratio of the alpha-hydroxy ketone to bisacylphosphine oxide may be from about 2:1 to about 15:1. This may include, from about 3:1 to about 12:1, from about 5:1 to about 10:1, from about 5:1 to about 9:1, from about 5:1 to about 8:1 or from about 5:1 to about 7:1. In some embodiments, the weight ratio of alpha-hydroxy ketone to bisacylphosphine oxide is from about 7:1 to about 15:1, from about 8:1 to about 15:1, from about 9:1 to about 15:1, from about 10:1 to about 15:1, or from about 12:1 to about 15:1. In some embodiments, the weight ratio of alpha-hydroxy ketone to bisacylphosphine oxide is from about 7:1 to about 12:1, or from about 8:1 to about 11:1.

Efficient curing of the present coatings may be achieved with the alpha-hydroxy ketone photoinitiator alone.

Other mixtures of photoinitiators may also be used in the compositions. Camphorquinone is one example of a

suitable photoinitiator for curing a coating composition with visible light.

The UV curable coating compositions described herein may also include a coinitiator or photoinitiator synergist. The coinitiators can be tertiary aliphatic amines (such as methyl diethanol amine and triethanol amine), aromatic amines (such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate, (meth)acrylated amines (such as those commercially available under the trade designations EBECRYL 7100 and UVECRYL P104 and P115, all from UCB RadCure Specialties, Smyrna, Ga.), and amino-functional acrylate or methacrylate resin or oligomer blends (such as those commercially available under the trade designations EBECRYL 3600 or EBECRYL 3703, both from UCB RadCure Specialties). Combinations of the above categories of compounds may also be used.

Preferred photoinitiators include benzophenone, 4-methylbenzophenone, benzoyl benzoate, phenylacetophenones, 2,2-dimethoxy-2-phenylacetophenone, alpha,alpha-diethoxyacetophenone, hydroxycyclo-hexylphenylketone, 2-hydroxy-2-methyl-1-phenylpropan-1-one, bis-(2,6-dimethoxybenzoyl)-2,4,4-trimethylpentyl phosphine oxide, 2-hydroxy-2-methyl-1-phenylpropan-1-one, 2-hydroxy-2-methyl-1-phenylpropan-1-one, 2,4,6-trimethylbenzoyl-diphenylphosphine oxide, and combinations thereof.

UV curable coating compositions having resins with vinyl ether functional groups can be cured by UV or visible light using cationic-generating photoinitiators. Examples of suitable cationic-generating photoinitiators include super acid-generating photoinitiators, such as triarylsulfonium salts. One useful triarylsulfonium salt is triphenyl sulfonium hexafluorophosphate.

The amount of hydrogen abstraction-type photoinitiator in such a composition is preferably at least 0.1 wt %, more preferably at least 0.2 wt %, and even more preferably at least 0.4 wt-%, based upon the total weight of the composition. The amount of hydrogen abstraction-type photoinitiator in such a composition is preferably no more than 4 wt %, more preferably no more than 3 wt %, and even more preferably no more than 2 wt %, based upon the total weight of the composition.

UV curable coating compositions having resins with vinyl ether functional groups can be cured by UV or visible light using cationic-generating photoinitiators. Examples of suitable cationic-generating photoinitiators include super acid-generating photoinitiators, such as triarylsulfonium salts. One useful triarylsulfonium salt is triphenyl sulfonium hexafluorophosphate.

Many coating compositions that may be cured by UV or visible light may also be cured with an electron beam. Techniques and devices for curing a coating composition using an electron beam are known in the art. These techniques do not require a photoinitiator for electron beam cure of the coating.

UV curable coating compositions that include compounds with (meth)acryl and/or allyl functional groups may also be thermally cured using a suitable initiator. The thermal initiator typically facilitates the curing process by a free radical mechanism and typically includes a peroxide or azo compound. Peroxide compounds suitable for use as initiators in the coating compositions of the present invention include t-butyl perbenzoate, t-amyl perbenzoate, cumene hydroperoxide, t-amyl peroctoate, methyl ethyl ketone peroxide, benzoyl peroxide, cyclohexanone peroxide, 2,4-pentanedione peroxide, di-t-butyl peroxide, t-butyl hydroperoxide, and di-(2-ethylhexyl)-peroxydicarbonate. Suitable azo compounds which may be employed as an initiator in the present compositions include 2,2-azo bis-(2,4-dimethylpentane-nitrile), 2,2-azo bis-(2-methylbutanenitrile), and 2,2-azo bis-(2-methylpropanenitrile).

Certain coating compositions of the present technology may also include one or more of a group of ingredients that can be generally referred to as performance enhancing additives. Typical performance enhancing additives that may be employed include surface active agents, pigments, colorants, dyes, surfactants, thickeners, heat stabilizers (antioxidants), leveling agents, anti-cratering agents, curing indicators, plasticizers, fillers, sedimentation inhibitors, hindered amine light stabilizers, ultraviolet-light absorbers, optical brighteners, and the like to modify properties.

In a preferred embodiment, the compositions are ultraviolet ("UV") radiation-curable, and includes a (meth)acryl functional resin, an ethylenically unsaturated functional compound, a functional silicone compound, and a photoinitiator.

In any embodiment, the compositions described herein may include an antioxidant(s). Illustrative antioxidants of component f) may include the compounds selected from 1.1 - 1.17 below:

1.1. Alkylated monophenols include 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-($\alpha$-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1-methylundec-1-yl)phenol, 2,4-dimethyl-6-(1-methylheptadec-1-yl) phenol, 2,4-dimethyl-6-(1-methyltridec-1-yl)phenol, and mixtures thereof.

1.2. Alkylthiomethylphenols include 2,4-dioctylthiomethyl-6-tert-butylphenol, 2,4-dioctylthiomethyl-6-methylphenol, 2,4-dioctylthiomethyl-6-ethylphenol, and 2,6-di-dodecylthiomethyl-4-nonylphenol.

1.3. Hydroquinones and alkylated hydroquinones include 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, and bis-(3,5-di-tert-butyl-4-hydroxyphenyl) adipate.

1.4. Tocopherols include α-tocopherol, β-tocopherol, γ-tocopherol, and δ-tocopherol and mixtures thereof (Vitamin E).

1.5. Hydroxylated thiodiphenyl ethers include 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), and 4,4'-bis(2,6-dimethyl-4-hydroxyphenyl)disulfide.

1.6. Alkylidenebisphenols include 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl) butane, 1,1-bis(5-tert-butyl-4-hydroxy-2-methyl-phenyl)-3-n-dodecylmercaptobutane, ethylene glycol bis[3,3-bis(3-tert-butyl-4-hydroxyphenyl)butyrate], bis(3-tert-butyl-4-hydroxy-5-methyl-phenyl)dicyclopentadiene, bis [2-(3'tert-butyl-2-hydroxy-5-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.

1.7. Benzyl compounds include 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, 1,3,5-tri-(3,5-di-tert-butyl-4-hydroxybenzyl)-2,4,6-trimethylbenzene, di-(3,5-di-tert-butyl-4-hydroxybenzyl) sulfide, 3,5-di-tert-butyl-4-hydroxybenzyl-mercapto-acetic acid isooctyl ester, bis-(4-tert-butyl-3-hydroxy-2,6-dimethylbenzyl)dithiol terephthalate, 1,3,5-tris-(3,5-di-tert-butyl-4-hydroxybenzyl) isocyanurate, 1,3,5-tris-(4-tert-butyl-3-hydroxy-2,6-dimethylbenzyl) isocyanurate, 3,5-di-tert-butyl-4-hydroxybenzyl-phosphoric acid dioctadecyl ester, and 3,5-di-tert-butyl-4-hydroxybenzyl-phosphoric acid monoethyl ester, calcium-salt.

1.8. Hydroxybenzylated malonates include dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, and bis[4-(1,1,3,3-tetramethylbutyl)phenyl]-2,2-bis(3,5-di-tert-butyl-4-hydroxybenzyl) malonate.

1.9. Aromatic hydroxybenzyl compounds include 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, and 2,4,6-tris(3,5-di-tert-butyl-4-hydroxybenzyl)phenol.

1.10. Triazine compounds include 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, and 1,3,5-tris(3,5-dicyclohexyl-4-hydroxybenzyl)isocyanurate.

1.11. Benzylphosphonates include dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, and the calcium salt of the monoethyl ester of 3,5-di-tert-butyl-4-hydroxybenzylphosphonic acid.

1.12. Acylaminophenols include 4-hydroxy-lauric acid anilide, 4-hydroxystearic acid anilide, 2,4-bis-octylmercapto-6-(3,5-tert-butyl-4-hydroxyanilino)-s-triazine, and octyl-N-(3,5-di-tert-butyl-4-hydroxyphenyl)-carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, and 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, and 4-hydroxymethyl-1-phospha-2,6,7-trioxabicyclo[2.2.2]octane.

1.15. Esters of β-(3,5-dicyclohexyl-4-hydroxyphenyl)propionic acid with mono- or polyhydric alcohols, *e.g.* with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, and 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, *e.g.* with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, and 4-hydroxymethyl-1-phospha-2,6,7-trioxabicyclo[2.2.2]octane.

1.17. Amides of β-(3,5-di-tert-butyl-4-hydroxyphenyl)propionic acid *e.g.* N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, and N,N'-bis[2-(3-[3,5-di-tert-butyl-4-hydroxyphenyl]propionyloxy)ethyl]oxamide (Naugard®XL-1 supplied by Uniroyal).

In any embodiment, the compositions described herein may include a phenolic antioxidant(s).

In any embodiment, the composition described herein may include a sterically hindered amine light stabilizer(s) ("HALS"). In any embodiment, the HALS may contain at least one moiety of Formula

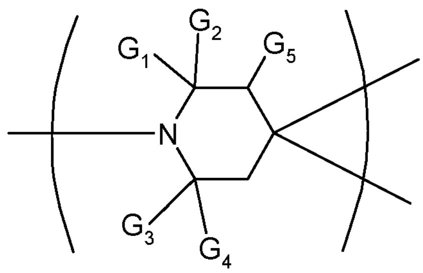

where $G_1$, $G_2$, $G_3$, $G_4$ and $G_5$ are independently alkyl of 1 to 8 carbon atoms or $G_1$ and $G_2$ or $G_3$ and $G_4$ together are pentamethylene.

Illustrative HALS are disclosed in, for example, U.S. Pat. Nos. 5,004,770; 5,204,473; 5,096,950; 5,300,544; 5,112,890; 5,124,378; 5,145,893; 5,216,156; 5,844,026; 5,980,783; 6,046,304; 6,117,995; 6,271,377; 6,297,299; 6,392,041; 6,376,584; and 6,472,456, while illustrative hindered hydroxyalkoxyamine stabilizers are disclosed in, for example, U.S. Pat. Nos. 6,271,377; 6,392,041; and 6,376,584.

Illustrative HALS include, but are not limited to, 1-cyclohexyloxy-2,2,6,6-tetramethyl-4-octadecylaminopiperidine; bis(2,2,6,6-tetramethylpiperidin-4-yl) sebacate; bis(1-acetoxy-2,2,6,6-tetramethylpiperidin-4-yl) sebacate; bis(1,2,2,6,6-pentamethyl-4-yl) sebacate; bis(1-cyclohexyloxy-2,2,6,6-tetramethylpiperidin-4-yl) sebacate; bis(1-octyloxy-2,2,6,6-tetramethylpiperidin-4-yl) sebacate; bis(1-acyl-2,2,6,6-tetramethylpiperidin-4-yl) sebacate; bis(1,2,2,6,6-pentamethyl-4-piperidyl)-n-butyl-3,5-di-tert-butyl-4-hydroxybenzylmalonate; 2,4-bis[(1-cyclohexyloxy-2,2,6,6-tetramethylpiperidin-4-yl)-butyl-amino]-6-(2-hydroxyethylamino-s-triazine; bis(1-cyclohexyloxy-2,2,6,6-tetramethylpiperidin-4-yl)-adipate; 2,4-bis[(1-cyclohexyloxy-2,2,6,6-piperidin-4-yl)-butylamino]-6-chloro-s-triazine; 1-(2-hydroxy-2-methylpropoxy)-4-hydroxy-2,2,6,6-tetramethylpiperidine; 1-(2-hydroxy-2-methylpropoxy)-4-oxo-2,2,6,6-tetramethylpiperidine; 1-(2-hydroxy-2-methylpropoxy)-4-octadecanoyloxy-2,2,6,6-tetramethylpiperidine; bis(1-(2-hydroxy-2-methylpropoxy)-2,2,6,6-tetramethylpiperidin-4-yl) sebacate; bis(1-(2-hydroxy-2-methylpropoxy)-2,2,6,6-tetramethylpiperidin-4-yl) adipate; 2,4-bis{N-[1-(2-hydroxy-2-methylpropoxy)-2,2,6,6-tetramethylpiperidin-4-yl]-N-butylamino}-6-(2-hydroxyethylamino)-s-triazine; 4-benzoyl-2,2,6,6-tetramethylpiperidine; di-(1,2,2,6,6-pentamethylpiperidin-4-yl) p-methoxybenzylidenemalonate; 4-stearyloxy-2,2,6,6-tetramethylpiperidine; bis(1-octyloxy-2,2,6,6-tetramethylpiperidyl) succinate; 1,2,2,6,6-pentamethyl-4-aminopiperidine; 2-undecyl-7,7,9,9-tetramethyl-1-oxa-3,8-diaza-4-oxo-spiro[4,5]decane; tris(2,2,6,6-tetramethyl-4-piperidyl) nitrilotriacetate; tris(2-hydroxy-3-(amino-(2,2,6,6-tetramethylpiperidin-4-yl)propyl) nitrilotriacetate; tetrakis-(2,2,6,6-tetramethyl-4-piperidyl)-1,2,3,4-butane-tetracarboxylate; tetrakis-(1,2,2,6,6-pentamethyl-4-piperidyl)-1,2,3,4-butane-tetracarboxylate; 1,1'-(1,2-ethanediyl)-bis-(3,3,5,5-tetramethylpiperazinone); 3-n-octyl-7,7,9,9-tetramethyl-1,3,8-triazaspiro[4.5]decan-2,4-dione; 8-acetyl-3-dodecyl-7,7,9,9-tetramethyl-1,3,8-triazaspiro[4.5]decane-2,4-dione; 3-dodecyl-1-(2,2,6,6-tetramethyl-4-piperidyl)pyrrolidin-2,5-dione; 3-dodecyl-1-(1,2,2,6,6-pentamethyl-4-piperidyl)pyrrolidine-2,5-dione; N,N'-bis-formyl-N,N'-bis(2,2,6,6-tetramethyl-4-piperidyl)hexamethylenediamine; the reaction product of 2,4-bis[(1-cyclohexyloxy-2,2,6,6-piperidin-4-yl)butylamino]-6-chloro-s-triazine with N,N'-bis(3-aminopropyl)ethylenediamine); the condensate of 1-(2-hydroxyethyl)-2,2,6,6-tetramethyl-4-hydroxypiperidine and succinic acid; linear or cyclic condensates of N,N'-bis(2,2,6,6-tetramethyl-4-piperidyl)-hexamethylenediamine and 4-tert-octylamino-2,6-dichloro-1,3,5-triazine; linear or cyclic condensates of N,N'-bis(2,2,6,6-tetramethyl-4-piperidyl)-hexamethylenediamine and 4-cyclohexylamino-2,6-dichloro-1,3,5-triazine; linear or cyclic condensates of N,N'-bis-(2,2,6,6-tetramethyl-4-piperidyl)-hexamethylenediamine and 4-morpholino-2,6-dichloro-1,3,5-triazine; linear or cyclic condensates of N,N'-bis-(1,2,2,6,6-pentamethyl-4-piperidyl)hexamethylenediamine and 4-morpholino-2,6-dichloro-1,3,5-triazine; the condensate of 2-chloro-4,6-bis(4-n-butylamino-2,2,6,6-tetramethylpiperidyl)-1,3,5-triazine and 1,2-bis(3-aminopropylamino)ethane; the condensate of 2-chloro-4,6-di-(4-n-butylamino-1,2,2,6,6-pentamethylpiperidyl)-1,3,5-triazine and 1,2-bis-(3-aminopropylamino)ethane; a reaction product of 7,7,9,9-tetramethyl-2-cycloundecyl-1-oxa-3,8-diaza-4-oxospiro [4,5]decane and epichlorohydrin; poly[methyl, (3-oxy-(2,2,6,6-tetramethylpiperidin-4-yl) propyl)] siloxane, CAS#182635-99-0; the reaction product of maleic acid anhydride-$C_{18}$-$C_{22}$-$\alpha$-olefin-copolymer with 2,2,6,6-tetramethyl-4-aminopiperidine; the oligomeric compound which is the condensation product of 4,4'-hexamethylenebis(amino-2,2,6,6-tetramethylpiperidine) and 2,4-dichloro-6-[(2,2,6,6-tetramethylpiperidin-4-yl)butyl-amino]-s-triazine end-capped with 2-chloro-4,6-bis(dibutylamino)-s-triazine; the oligomeric compound which is the condensation product of 4,4'-hexamethylenebis(amino-1,2,2,6,6-pentamethylpiperidine) and 2,4-dichloro-6-[(1,2,2,6,6-pentaamethylpiperidin-4-yl)butylamino]-s-triazine end-capped with 2-chloro-4,6-bis(dibutylamino)-s-triazine; the oligomeric compound which is the condensation product of 4,4'-hexamethylenebis(amino-1-propoxy-2,2,6,6-tetramethylpiperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine; the oligomeric compound which is the condensation product of 4,4'-hexamethylenebis(amino-1-acyloxy-2,2,6,6-tetramethylpiperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine; and a product obtained by reacting a product, obtained by reacting 1,2-bis(3-aminopropylamino)ethane with cyanuric chloride and (2,2,6,6-tetramethylpiperidin-4-yl) butylamine, or combinations of two or more thereof. Also included are the sterically hindered N-H, N-methyl, N-methoxy, N-propoxy, N-octyloxy, N-cyclohexyloxy, N-acyloxy, and N-(2-hydroxy-2-methylpropoxy) analogues of any of the above mentioned compounds. For example, replacing an N-H hindered amine with an N-methyl hindered amine would be employing the N-methyl analogue in place of the N-H.

In any embodiment, the composition may include about 0.05 wt% to about 20 wt% HALS, based on the total composition. In any embodiment, the composition may include about 0.1 wt% to about 10 wt% HALS, based on the total composition. In any embodiment, the composition may include about 0.2 wt% to about 8 wt% HALS, based on the total composition. In any embodiment, the composition may include about 0.3 wt% to about 3.5 wt% HALS (including about 0.5 wt% to about 3 wt%), based on the total composition.

In any embodiment, the composition may include a UV absorber(s) (UVA). In any embodiment, the UVA may include hydroxyphenylbenzotriazoles, hydroxyphenyl-s-triazines, benzophenones, esters of benzoic acids, acrylates, malonates, oxamides, or combinations of two or more thereof.

In any embodiment, the UVA may include known commercial hydroxyphenyl-2H-benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,563,242; 5,574,166; 5,607,987, 5,977,219 and 6,166,218 such as 2-(2-hydroxy-5-methylphenyl)-2H-benzotriazole; 2-(3,5-di-t-butyl-2-hydroxyphenyl)-2H-benzotriazole; 2-(2-hydroxy-5-t-butylphenyl)-2H-benzotriazole; 2-(2-hydroxy-5-t-octylphenyl)-2H-benzotriazole; 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole; 2-(3-sec-butyl-5-t-butyl-2-hydroxyphenyl)-2H-benzotriazole; 2-(2-hydroxy-4-octyloxyphenyl)-2H-benzotriazole; 2-(3,5-di-t-amyl-2-hydroxyphenyl)-2H-benzotriazole; 2-(3,5-bis-$\alpha$-cumyl-2-hydroxyphenyl)-2H-benzotriazole; 2-(3-t-butyl-2-hydroxy-5-(2-($\omega$-hydroxy-octa-(ethyleneoxy)carbonyl-ethyl)-phenyl)-2H-benzotriazole; 2-(3-dodecyl-2-hydroxy-5-methylphenyl)-2H-benzotriazole; 2-(3-t-butyl-2-hydroxy-5-(2-octyloxycarbonyl)ethylphenyl)-2H-benzotriazole; dodecylated 2-(2-hydroxy-5-methylphenyl)-2H-benzotriazole; 2-(3-t-butyl-2-hydroxy-5-(2-octyloxycarbonylethyl)phenyl)-5-chloro-2H-benzotriazole; 2-(3-tert-butyl-5-(2-(2-ethylhexyloxy)-carbonylethyl)-2-hydroxyphenyl)-5-chloro-2H-benzotriazole; 2-(3-t-butyl-2-hydroxy-5-(2-methoxycarbonylethyl)phenyl)-5-chloro-2H-benzotriazole; 2-(3-t-butyl-2-hydroxy-5-(2-methoxycarbonylethyl)phenyl)-2H-benzotriazole, 2-(3-t-butyl-5-(2-(2-ethylhexyloxy) carbonylethyl)-2-hydroxyphenyl)-2H-benzotriazole, 2-(3-t-butyl-2-hydroxy-5-(2-isooctyloxycarbonylethyl)phenyl-2H-benzotriazole; 2,2'-methylene-bis(4-t-octyl-(6-2H-benzotriazol-2-yl)phenol); 2-(2-hydroxy-3-α-cumyl-5-t-octylphenyl)-2H-benzotriazole; 2-(2-hydroxy-3-t-octyl-5-α-cumylphenyl)-2H-benzotriazole; 5-fluoro-2-(2-hydroxy-3,5-di-α-cumylphenyl)-2H-benzotriazole; 5-chloro-2-(2-hydroxy-3,5-di-α-cumylphenyl)-2H-benzotriazole; 5-chloro-2-(2-hydroxy-3-α-cumyl-5-t-octylphenyl)-2H-benzotriazole; 2-(3-t-butyl-2-hydroxy-5-(2-isooctyloxycarbonylethyl)phenyl)-5-chloro-2H-benzotriazole; 5-trifluoromethyl-2-(2-hydroxy-3-α-cumyl-5-t-octylphenyl)-2H-benzotriazole; 5-trifluoromethyl-2-(2-hydroxy-5-t-octylphenyl)-2H-benzotriazole; 5-trifluoromethyl-2-(2-hydroxy-3,5-di-t-octylphenyl)-2H-benzotriazole; methyl-3-(5-trifluoromethyl-2H-benzotriazol-2-yl)-5-t-butyl-4-hydroxyhydrocinnamate; 5-butylsulfonyl-2-(2-hydroxy-3-α-cumyl-5-t-octylphenyl)-2H-benzotriazole; 5-trifluoromethyl-2-(2-hydroxy-3-α-cumyl-5-t-butylphenyl)-2H-benzotriazole; 5-trifluoromethyl-2-(2-hydroxy-3,5-di-t-butylphenyl)-2H-benzotriazole; 5-trifluoromethyl-2-(2-hydroxy-3,5-di-α-cumylphenyl)-2H-benzotriazole; 5-butylsulfonyl-2-(2-hydroxy-3,5-di-t-butylphenyl)-2H-benzotriazole; 5-phenylsulfonyl-2-(2-hydroxy-3,5-di-t-butylphenyl)-2H-benzotriazole; or combinations of two or more thereof. Illustrative 2-hydroxybenzophenones include 4-hydroxy, 4-methoxy, 4-octyloxy, 4-decyloxy, 4-dodecyloxy, 4-benzyloxy, 4,2',4'-trihydroxy, 2'-hydroxy-4,4'-dimethoxy derivatives, or combinations of two or more thereof.

In any embodiment, the UVA may include esters of substituted and unsubstituted benzoic acids include 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

In any embodiment, the UVA may include acrylates and malonates include α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, dimethyl p-methoxybenzylidenemalonate (CAS# 7443-25-6), and di-(1,2,2,6,6-pentamethylpiperidin-4-yl) p-methoxybenzylidenemalonate (CAS #147783-69-5).

In any embodiment, the UVA may include oxamides including 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

In any embodiment, the UVA may include tris-aryl-o-hydroxyphenyl-s-triazines include hydroxyphenyl-s-triazines and triazines as disclosed in United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,736,597; 5,942,626; 5,959,008; 5,998,116; 6,013,704; 6,060,543; 6,242,598 and 6,255,483. Illustrative hydroxyphenyl-s-triazines and triazine include, but are not limited to, 4,6-bis-(2,4-dimethylphenyl)-2-(2-hydroxy-4-octyloxyphenyl)-s-triazine; 4,6-bis-(2,4-dimethylphenyl)-2-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis [2-hydroxy-4-(2-hydroxy-4-(2-hydroxyethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine; 2,4-bis(2,4-dihydroxyphenyl)-6-(2,4-dimethylphenyl)-s-triazine; 2,4-bis(4-biphenylyl)-6-(2-hydroxy-4-octyloxycarbonylethylideneoxyphenyl)-s-triazine; 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine; 2,4-bis(2,4-dimethylphenyl)-6-[2-hydroxy-4-(3-benzyloxy-2-hydroxy-propyloxy)phenyl]-s-triazine; 2,4-bis(2-hydroxy-4-n-butyloxyphenyl)-6-(2,4-di-n-butyloxyphenyl)-s-triazine; 2,4-bis(2,4-dimethylphenyl)-6-[2-hydroxy-4-(3-nonyloxy*-2-hydroxy-propyloxy)-5-α-cumylphenyl]-s-triazine (* denotes a mixture of octyloxy, nonyloxy and decyloxy groups), methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio, 2,4,6-tris(2-hydroxy-4-isooctyloxycarbonylisopropylideneoxyphenyl)-s-triazine; 2,4-bis(2,4-dimethylphenyl)-6-(2-hydroxy-4-hexyloxy-5-α-cumylphenyl)-s-triazine; 2-(2,4,6-trimethylphenyl)-4,6-bis[2-hydroxy-4-(3-butyloxy-2-hydroxypropyloxy)phenyl]-s-triazine; 2,4,6-tris[2-hydroxy-4-(3-sec-butyloxy-2-hydroxypropyloxy) phenyl]-s-triazine; mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine; 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.

In any embodiment, the UVA may include hydroxyphenyl-s-triazine and/or hydroxylphenylbenzotriazole.

In any embodiment, the composition may include about 0.01 wt% to about 5 wt% UVA, based on the total composition. In any embodiment, the composition may include about 0.025 wt% to about 2 wt% UVA, based on the total composition. In any embodiment, the composition may include about 0.1 wt% to about 1 wt% UVA, based on the total composition.

In any embodiment, the composition may include one or more surface-active agents. In any embodiment, the surface-active agent may modify the interaction of the curable coating composition with the substrate, in particular, the agent may modify the ability of the composition to wet a substrate. Surface active agents may have other properties as well. For example, surface active agents may also include leveling, defoaming, or flow agents, and the like. The surface active agent may affect qualities of the curable coating composition including, for example, how the coating composition is handled, how it spreads across the surface of the substrate, and how it bonds to the substrate. If present, the composition includes no more than about 5 wt% of the surface-active agent, based on the total composition.

Surface active agents have also been found to assist incorporation as well as assist coating formulation. Surface active agents suitable for use in coating compositions are known to those of skill in the art or can be determined using standard methods. Exemplary surface active agents include polydimethylsiloxane surface active agents (such as those commercially available under the trade designations SILWET L-760 and SILWET L-7622 from OSI Specialties, South Charleston, W. Va., or BYK 306, BYK 333, BYK 411 and BYK 346 from Byk-Chemie, Wallingford, Conn.) and fluorinated surface active agents (such as that commercially available as FLUORAD FC-430 from 3M Co., St. Paul, Minn.). The surface active agents may include a defoamer. Suitable defoamers include polysiloxane defoamers (such as a methylalkylpolysiloxane like that commercially available under the trade designation BYK 077 or BYK 500 from Byk-Chemie) or polymeric defoamers (such as that commercially available under the trade designation BYK 051 from Byk-Chemie).

The compositions disclosed herein may also include other ingredients that modify properties of the composition as it is stored, handled, or applied, and at other or subsequent stages. Waxes, flatting agents, mar and abrasion additives, and other similar performance enhancing additives may be employed as required in amounts effective to upgrade the performance of the cured coating and the coating composition, as long as the mar and ink resistance of the coating is not substantially compromised. Desirable performance characteristics of the coating include chemical resistance, abrasion resistance, hardness, gloss, reflectivity, appearance, or combinations of these characteristics, and other similar characteristics.

For example, a flatting agent or a mar/abrasion additive is optionally used. Suitable examples include, but are not limited to, wax-treated silicas and non-silica organic flatting agents. A suitable non-silica organic flatting agent is a polymeric urea available under the trade designation BERMASILK from Albemarle Corp., Baton Rouge, La., and BERMASILK MK has been found to be particularly useful.

Other components that may be included in the compositions include those typically used in paint formulations, such as thickeners, biocides, mildewcides, surfactants, dispersants, defoamers, and the like. Suitable additives for use in coating compositions of the present invention are described in Koleske et al., Paint and Coatings Industry, April, 2003, pages 12-86.

The compositions may additionally contain other or further additives. Illustrative additives may include thermal inhibitors intended to prevent premature polymerization. Illustrative thermal inhibitors include hydroquinone, hydroquinone derivatives, p-methoxyphenyl, β-naphthol, or sterically hindered phenyls, such as 2,6-di(tert-butyl)-p-cresol. To enhance the dark storage stability other additives may be uses such as copper compounds, including copper naphthenate, copper stearate, or copper octoate; phosphorus compounds, including triphenylphosphine, tributylphosphine, triethyl phosphite, triphenyl phosphite, or tribenzyl phosphite; quaternary ammonium compounds, such as tetramethylammonium chloride or trimethylbenzylammonium chloride; or hydroxylamine derivatives, such as N-diethylhydroxylamine. The exclusion of atmospheric oxygen during the photopolymerization may be effected by adding paraffin or similar wax-like substances which, at the onset of photopolymerization, migrate to the surface owing to lack of solubility in the polymer and form a transparent film which prevents air from entering the system.

Binary electron-rich/electron-poor monomer systems are often employed in thick pigmented coatings. For example, styrene/unsaturated polyester systems are used in gel coats.

In any embodiment, the compositions may have a viscosity of about 100 to 3000 cps (centipoise) (including viscosities of about 100 to about 2000 cps, about 100 to about 1500 cps, or about 100 to about 1000 cps).

In another aspect, the present technology provides methods for forming a photocured coating on a (optionally primed) substrate. In any embodiment, the method includes applying the composition disclosed herein to a substrate and irradiating the composition with a light source to form the photocured coating. In any embodiment, before irradiating, the composition may be allowed to dry to remove solvent (if present). In any embodiment, the coating may be a protective coating.

In any embodiment, the irradiating/curing of the composition may be accomplished by exposure to ultraviolet radiation (e.g. using an H-bulb or other lamp) at a desired wavelength or an electron beam or light emitting diode. In any embodiment, the curing may be conducted in an inert atmosphere (defined as an atmosphere having less than 50 parts per million $O_2$). Alternatively, a transferable UV curable coating may be formed by applying the composition to a release liner, at least partially cured, and subsequently transferring from the release layer to the substrate using a thermal transfer or photoradiation application technique.

In any embodiment, the photosensitivity of the compositions generally ranges from the UV region (about 200 nm) up to about 600 nm. Suitable radiation comprises, for example, sunlight or light from artificial sources. Therefore, a large

number of very different types of light source may be used. Both point sources and flat radiators (lamp carpets) are appropriate. Examples are carbon arc lamps, xenon arc lamps, medium-pressure, highpressure and low-pressure mercury lamps, doped with metal halides if desired (metal halogen lamps), microwave-stimulated metal vapor lamps, excimer lamps, superactinic fluorescent tubes, fluorescent lamps, incandescent argon lamps, electronic flashlights, photographic flood lamps, electron beams and X-rays. For example, Hg lamps, iron doped Hg lamps or Ga doped Hg lamps are suitable. Artificial light sources equivalent to daylight may be used, such as low intensity lamps such as specific fluorescent lamps, e.g. Philips TL05 or TL09 special fluorescent lamps. The distance between the lamp and the substrate according to the invention which is to be coated can vary depending on the application and on the type and/or power of the lamp, for example between 2 cm and 150 cm. Also suitable, for example, are lasers in the visible range. The cure may be effected behind a transparent layer (e.g. a pane of glass or plastic sheet).

In any embodiment, the compositions may be photocured using light emitting diode (LED) arrays. The LED arrays may be a combination of 365 nm and 395 nm wavelength LED lamps.

Complicated and expensive apparatus is superfluous when using light sources that emit light of low intensity, and the compositions in this case may be used in particular for special exterior applications. The cure with daylight or with light sources equivalent to daylight is an alternative to the standard moving belt method of UV curing. In contrast to the moving belt method, which is particularly suitable for flat parts, the daylight cure may be used for exterior coatings on stationary and fixed objects or constructions. These are typically coatings on buildings, facades, bridges, ships or markings on roads and sites as disclosed, inter alia, in EP-A-160723.

The cure with daylight or with light sources equivalent to daylight is an energy-saving method and, in exterior applications, no emission of volatile organic components into the environment occurs. The cure with daylight or light sources equivalent to daylight is, however, also suitable for series curing in which the objects are so positioned that angular areas are also exposed to daylight. In this connection, mirrors or reflectors can also be used.

In any embodiment, the composition may be applied as a single or multiple layers directly to an article or (*e.g.* light transmissive) substrate using conventional film application techniques. Alternatively, the composition may be applied to a release liner, at least partially cured, and transfer coated using a thermal transfer or a photoradiation application technique. Although it is usually convenient for the substrate to be in the form of a roll of continuous web, the coatings may be applied to individual sheets.

Photopolymerizable and UV curable are understood to mean to the same thing: a coating composition that is photocured or polymerized with UV light. The instant compositions are not thermally cure coatings. Rather, the compositions are cured by UV light resulting in the photocured coating layer or protective film.

In any embodiment, the present coating exhibits a transmission of $\leq$ 0.1% at 290 nm - 300 nm, $\leq$ 0.1% at 350 nm, and $\leq$ 0.01% at 360 nm. Such transmissions may be exhibited in a single photocured coating layer at a thickness of about 0.2 mil, about 1 mil, about 2 mil, about 3 mil, about 4 mil, and about 5 mil (*note:* 1 mil is 0.001 inch and is equal to 25.4 micrometers). The transmission of a cured coating is measured in adherence to a fused silica glass plate that is UV transparent.

In any embodiment, the photocured coatings (dry film thickness) may have a thickness from about 0.2 mil to about 10 mil (including from about 0.2 mil to about 8 mil, from about 0.2 mil to about 6 mil, from about 0.2 mil to about 4 mil, or from about 0.2 mil to about 2 mil). For example, the dry film thickness may be from about 0.2 mil to about 10 mil, from about 0.2 mil to about 8 mil, from about 0.22 mil to about 6 mil, from about 0.2 mil to about 4 mil, or from about 0.2 mil to about 2 mil. In yet further embodiments, the dry coating film thicknesses are from about 0.5 mil to about 3.5 mil, or from about 1 mil to about 2.5 mil.

In any embodiment, the photocured coatings or protective films derived from the compositions may exhibit enhanced durability and/or superior dirt pick up resistance.

In any embodiment, a variety of substrates may be used. Suitable substrate materials include glass, metal, or plastic. Plastics thermosetting or thermoplastic polymers such as polycarbonate, poly(meth)acrylate (e.g., polymethyl methacrylate or "PMMA"), polyolefins (e.g., polypropylene or "PP"), polyurethane, polyesters (e.g., polyethylene terephthalate or "PET"), polyamides, polyimides, phenolic resins, cellulose diacetate, cellulose triacetate, polystyrene, styrene-acrylonitrile co-polymers, epoxies, and the like. Typically, the substrate will be chosen based in part on the desired optical and mechanical properties for the intended use. Such mechanical properties typically will include flexibility, dimensional stability and impact resistance.

In any embodiment, the substrate may include self-supporting polymeric films. Films made from polyesters such as PET or polyolefins such as PP (polypropylene), PE (polyethylene) and PVC (polyvinyl chloride) may be used. The polymeric material may be formed into a film using conventional filmmaking techniques such as by extrusion and optional uniaxial or biaxial orientation of the extruded film. The substrate may be treated to improve adhesion between the substrate and the photocured coating layer, e.g., chemical treatment, corona treatment such as air or nitrogen corona, plasma, flame, or actinic radiation. If desired, an optional tie layer or primer may be applied to the substrate and/or photocured coating layer to increase the interlayer adhesion.

In any embodiment, the substrate may be surface treated prior to applying the composition and curing. Surface

treatments can sometimes be useful to secure adhesion between a thermoplastic film layer and the photocured coating layer. Surface treatments include, for example, chemical priming, corona treatment, plasma or flame treatment.

In any embodiment, the coatings may be used as window films, in graphic overcoating, as solar control films, as backlit display films, as overlaminate films (exterior or interior digital graphics and the like), in signage, in laminated glazing, ink jet media coatings, in electrochromic/photochromic applications, optical light films, in safety glass/windshield interlayers, in-mold films, decals, anti-grafitti films, specialty packaging, compact disc coatings, protective coatings for metal substrates used in automotive manufacture (wheels, doors, hoods, and the like), protective coatings for wood (furniture and flooring), protective coatings for forward lighting, protective coatings for polymer substrates (e.g. for plastic parts such as machine and automobile parts), and other high-performance coating applications where improved scratch resistance and improved dirt pick up resistance is needed. It is also possible to apply the composition described herein to a temporary, flexible support and then to coat the final substrate, for example a copper-laminated circuit board, by means of layer transfer via lamination.

The photocured films are especially effective at protecting the underlying substrate from the deleterious effects of UV radiation. For example, they are effective in protecting dyes or pigments present in the underlying substrates against color fade.

In any embodiment, the substrate surface may be coated by applying to the substrate a liquid composition, a solution or suspension. The choice of solvent and the concentration will depend mainly on the type of formulation and on the coating method employed. The solvent should be inert; in other words, it should not undergo any chemical reaction with the components and should be capable of being removed again after the coating operation, e.g. during the drying process. Examples of suitable solvents are ketones, ethers and esters, such as methyl ethyl ketone, isobutyl methyl ketone, cyclopentanone, cyclohexanone, N-methylpyrrolidone, dioxane, tetrahydrofuran, 2-methoxyethanol, 2-ethoxyethanol, 1-methoxy-2-propanol, 1,2-dimethoxyethane, ethyl acetate, n-butyl acetate, and ethyl 3-ethoxypropionate. The suspension is uniformly applied to a substrate by known coating techniques such as by spin coating, dip coating, curtain coating, knife coating, brushing or spraying or reverse roll coating.

In any embodiment, a method for forming a photocured protective film coating includes curing a UV curable coating composition described herein by irradiating the composition with ultraviolet radiation or daylight or with light sources equivalent to daylight. Preferably the compositions include: a) at least one ethylenically unsaturated polymerizable compound; b) a functionalized siloxane compound of Formula (I) and optionally c) micronized inorganic particles. In some embodiments, the composition includes d) a combination of photoinitiators comprising: i) at least one $\alpha$-hydroxy ketone photoinitiator; and ii) at least one bisacylphosphine oxide photoinitiator; and, optionally, e) a hindered amine light stabilizer. In some embodiments, the composition includes f) a compound selected from ultraviolet light absorbers, phenolic antioxidants, and organic or inorganic pigments.

In another aspect, the present technology provides an article and a photocured coating, wherein the photocured coating is a prepared from the compositions described herein. In any embodiment, the coating is adhered to the article. In any embodiment, the composition includes the micronized inorganic particle(s) described herein.

In any embodiment, the article having the photocured coating described herein may have a gloss or matte surface. Matte films typically have lower transmission and higher haze values than typical gloss films. For example, the haze is generally at least 5%, 6%, 7%, 8%, 9%, or 10% as measured according to ASTM D1003. Whereas gloss surfaces typically have a gloss of at least 130 as measured according to ASTM D 2457-03 at 60degree; matte surfaces have a gloss of less than 120. One exemplary matte film is commercially available from U.S.A. Kimoto Tech of Cedartown, Ga., under the trade designation "N4D2A."

In any embodiment, the surface may be roughened or textured to provide a matte surface. This may be accomplished in a variety of ways as known in the art including embossing the surface with a suitable tool that has been bead-blasted or otherwise roughened, as well as by curing the composition against a suitable roughened master as described in U.S. Pat. Nos. 5,175,030 (Lu et al.) and 5,183,597 (Lu).

In any embodiment, a particulate matting agent may be incorporated into the composition in order to impart anti-glare properties to the surface layer. If included, about 0.5 and 10% of the particulate matting agent may be present in the composition, based on the total composition. In some embodiments, this amount is about 2 wt%. The average particle diameter of the particulate matting agent has a predefined minimum and maximum that is partially dependent upon the thickness of the layer. However, generally speaking, average particle diameters below 1.0 microns do not provide the degree of anti-glare sufficient to warrant inclusion, while average particle diameters exceeding 10.0 microns deteriorate the sharpness of the transmission image. The average particle size is from about 1.0 to about 10.0 microns. This includes an average size from 1.7 to about 3.5 microns, in terms of the number-averaged value measured by the Coulter method.

As the particulate matting agent, inorganic particles or resin particles may be used including, for example, amorphous silica particles, $TiO_2$ particles, $Al_2O_3$ particles, cross-linked polymer particles such as those made of cross-linked poly(methyl methacrylate), cross-linked polystyrene particles, melamine resin particles, benzoguanamine resin particles, and cross-linked polysiloxane particles. By taking into account the dispersion stability and sedimentation stability of the particles in the UV curable coating mixture for the anti-glare layer and/or the hard coat layer during the manufacturing

process, resin particles may be used such as cross-linked polystyrene particles, since such resin particles have a high affinity for the binder material and a small specific gravity. The particulate matting agent shape may be spherical and/or amorphous. However, to obtain a consistent anti-glare property, spherical particles are desirable. Two or more kinds of particulate materials may also be used in combination.

One commercially available silica particulate matting agent having an average particle size of 3.5 microns is commercially available from W.R. Grace and Co., Columbia, Md. under the trade designation "Syloid C803."

If a pigment, dye, colorant, *etc.* is included in the composition, the photocured coating may be a tinted or pigmented coating. If no pigment, dye, colorant, *etc.* is included in the composition, the photocured coating may be a clear coating.

In any embodiment, the cured coating may have a thickness of of about 0.2 mil to about 10 mil thick. In any embodiment, the cured coating may have a thickness of of about 3 mil to about 7 mil thick. In any embodiment, the cured coating may have a thickness of about 5 micron. In any embodiment, the cured coating may have sufficient flexibility and minimal cracking. In any embodiment, the cured coating may exhibit good durability, abrasion resistance, or a combination thereof.

In a preferred embodiment, the present technology provides an article and a photocured coating layer in adherence thereto, wherein the photocured coating layer is a UV curable coating formulation that includes: a) at least one ethylenically unsaturated polymerizable compound; b) a functionalized siloxane compound of Formula (I) and optionally c) micronized inorganic particles. In some embodiments, the composition includes d) a combination of photoinitiators comprising: i) at least one $\alpha$-hydroxy ketone photoinitiator; and ii) at least one bisacylphosphine oxide photoinitiator; and, optionally, e) a hindered amine light stabilizer. In some embodiments, the composition includes f) a compound selected from ultraviolet light absorbers, phenolic antioxidants, and organic or inorganic pigments.

The present invention, thus generally described, will be understood more readily by reference to the following examples, which are provided by way of illustration and are not intended to be limiting of the present invention.

## EXAMPLES

### <u>Example 1 - UV curable compositions with Leveling Agent Only.</u>

UV curable compositions were prepared according to Table 1 followed by agitation for 30 minutes at ambient temperature in the absence of UV light to ensure proper mixing and complete dissolution of all components.

Table 1. UV Curable Compositions with Leveling Agent

| Component | Example 1-1 (wt%) | Example 1-2 (wt%) | Example 1-3 (wt%) | Example 1-4 (wt%) |
|---|---|---|---|---|
| aliphatic urethane acrylate, 70% solution mono-functional acrylic acid ester, trimethylolpropane formal acrylate (Component 1) | - | 65.50 | - | - |
| aliphatic urethane acrylate, 70% solution in hexanediol diacrylate (Component 2) | 17.10 | - | 65.50 | - |
| aliphatic urethane acrylate, 75 % solution in dipropylene-glycol diacrylate (DPGDA) (Component 3) | - | - | - | 65.50 |
| hexanediol diacrylate (Component 4) | 30.00 | 30.00 | 30.00 | 30.00 |
| 50 wt% ethoxylated trimethylolpropane triacrylate (TMPEOTA); 50 wt% micronized silica (Component 5) | 48.40 | - | - | - |
| 2-hydroxy-2-methyl-1-phenyl-propan-1-one (Component 6) | 3.00 | 3.00 | 3.00 | 3.00 |
| 90 wt% ethyl (2,4,6-trimethylbenzoyl) phenylphosphinate; 10 wt% phenylbis(2,4,6-trimethylbenzoyl)phosphine oxide | 1.00 | 1.00 | 1.00 | 1.00 |

(continued)

| Component | Example 1-1 (wt%) | Example 1-2 (wt%) | Example 1-3 (wt%) | Example 1-4 (wt%) |
|---|---|---|---|---|
| (Component 7) | | | | |
| copolyacrylate polymer (flow and leveling agent) (Component 8) | 0.50 | 0.50 | 0.50 | 0.50 |
| Total | 100 | 100 | 100 | 100 |

**Example 2 - UV curable compositions with Leveling Agent and Surface Modifier.**

UV curable compositions were prepared according to Table 2 followed by agitation for 30 minutes at ambient temperature in the absence of UV light to ensure proper mixing and complete dissolution of all components.

Table 2. UV Curable Compositions with Leveling Agent/Surface Modifiers

| Component | Example 2-1 (wt%) | Example 2-2 (wt%) | Example 2-3 (wt%) | Example 2-4 (wt%) | Example 2-5 (wt%) | Example 2-6 (wt%) | Example 2-7 (wt%) | Example 2-8 (wt%) | Example 2-9 (wt%) | Example 2-10 (wt%) | Example 2-11 (wt%) | Example 2-12 (wt%) |
|---|---|---|---|---|---|---|---|---|---|---|---|---|
| Component 2 | 17.03 | - | 17.10 | - | 17.10 | - | 16.88 | - | 17.10 | - | 17.10 | - |
| Component 3 | - | 65.22 | - | 65.5 | - | 65.5 | - | 64.67 | - | 65.50 | - | 65.50 |
| Component 4 | 28.88 | 28.88 | 29.00 | 29.00 | 29.00 | 29.00 | 26.66 | 26.66 | 27.00 | 27.00 | 27.00 | 27.00 |
| Component 5 | 48.19 | - | 48.40 | - | 48.40 | - | 47.78 | - | 48.40 | - | 48.40 | - |
| Component 6 | 2.99 | 2.99 | 3.00 | 3.00 | 3.00 | 3.00 | 2.96 | 2.96 | 3.00 | 3.00 | 3.00 | 3.00 |
| Component 7 | 1.00 | 1.00 | 1.00 | 1.00 | 1.00 | 1.00 | 0.99 | 0.99 | 1.00 | 1.00 | 1.00 | 1.00 |
| Component 8 | 0.50 | 0.50 | 0.50 | 0.50 | 0.50 | 0.50 | 0.49 | 0.49 | 0.50 | 0.50 | 0.50 | 0.50 |
| reactive polysiloxane-modified polymer with unsaturated terminal groups (surface modifier 1) | 1.43 | 1.43 | - | - | - | - | 4.29 | 4.29 | - | - | - | - |
| solvent-free modified polysiloxane (surface modifier 2) | - | - | 1.00 | 1.00 | - | - | - | - | 3.00 | 3.00 | - | - |
| organically modified polysiloxane (surface modifier 3) | - | - | - | - | 1.00 | 1.00 | - | - | - | - | 3.00 | 3.00 |
| Total | 100 | 100 | 100 | 100 | 100 | 100 | 100 | 100 | 100 | 100 | 100 | 100 |

**Example 3- UV curable compositions with Leveling Agent, Surface Modifiers, and Light Stabilizers.**

UV curable compositions were prepared according to Table 3 followed by agitation for 30 minutes at ambient temperature in the absence of UV light to ensure proper mixing and complete dissolution of all components. UV absorber (UVA) 1 is benzenepropanoic acid, 3-(2H-benzotriazol-2-yl)-5-(1, 1-dimethylethyl)-4-hydroxy-, C7-9-branched and linear alkyl esters and UVA 2 is a mixture of: 2-[4-[(2-hydroxy-3-dodecyloxypropyl)oxy]-2-hydroxyphenyl]-4,6-bis(2,4-dimethylphenyl)-1,3,5-triazine & 2-[4-[(2-hydroxy-3-tridecyloxypropyl)oxy]-2-hydroxyphenyl]-4,6-bis(2,4-dimethylphenyl)-1,3,5-triazine. Hindered amine light stabilizer (HALS) 1 is 3,5,5-trimethylhexanoic acid 2,2,6,6-tetramethyl-1-[2-(3,5,5-trimethylhexanoyloxy)-ethyl]-piperidin-4-yl ester; HALS 2 is bis(1-octyloxy-2,2,6,6-tetramethylpiperidin-4-yl) sebacate; and HALS 3 is a mixture of bis(1, 2, 2, 6, 6-pentamethyl-4-piperidyl) sebacate and methyl 1, 2, 2, 6, 6-pentamethyl-4-piperidyl sebacate.

Table 3. UV Curable Compositionss with Leveling Agent/Surface Modifiers/Light Stabilizers

| Component | Example 3-1 (wt%) | Example 3-2 (wt%) | Example 3-3 (wt%) | Example 3-4 (wt%) | Example 3-5 (wt%) |
|---|---|---|---|---|---|
| Component 2 | 17.10 | 17.10 | 17.10 | 17.10 | 17.10 |
| Component 4 | 24.57 | 24.57 | 24.57 | 24.57 | 24.57 |
| Component 5 | 48.40 | 48.40 | 48.40 | 48.40 | 48.40 |
| Component 6 | 3.00 | 3.00 | 3.00 | 3.00 | 3.00 |
| Component 7 | 1.00 | 1.00 | 1.00 | 1.00 | 1.00 |
| Component 8 | 0.50 | 0.50 | 0.50 | 0.50 | 0.50 |
| Surface modifier 1 | 1.43 | 1.43 | 1.43 | 1.43 | 1.43 |
| UVA 1 | 3.00 | 3.00 | - | - | - |
| UVA 2 | - | - | 3.00 | 3.00 | 3.00 |
| HALS 1 | 1.00 | - | - | - | - |
| HALS 2 | - | - | 1.00 | 1.00 | 1.00 |
| HALS 3 | - | 1.00 | - | - | - |
| Total | 100 | 100 | 100 | 100 | 100 |

**Example 4 - Photocured Coatings on Cold Rolled Steel Substrate.**

UV curable compositions prepared in Example 1 were applied to a cold roll steel substrate (ACT Test Panel) using a draw down bar and photocured using a IST UV systems (equipped with gallium-indium doped lamp (CK-I type) having a power setting of 42% and conveyor settings of 10 meters/minute). The UV dosage was UV A = 0.274 J/$cm^2$, UV B = 0.0.253 J/$cm^2$, UV C = 0.04 J/$cm^2$, and UV V = 0.339 J/$cm^2$. Each coated substrate was passed through UV curing twice to ensure a thorough and even cure. The dry film thicknesses, Pendulum hardness, and glass transition temperature ($T_g$) are provided in Table 4. Pendulum Hardness was tested according to ASTM D4366-14, "Standard Test Methods for Hardness of Organic Coatings by Pendulum Damping Tests," ASTM International.

Table 4. Pendulum Hardness of Instant Photocured Coatings

| Example | Compositon Example | Pendulum Hardness (swings) | Dry Film Thickness (mils) | $T_g$ (°C) |
|---|---|---|---|---|
| 4-1 | 1-1 | 105 | 1.8 | 73.0 |
| 4-2 | 1-2 | 37 | 1.5 | 61.7 |
| 4-3 | 1-3 | 115 | 1.6 | 70.0 |
| 4-4 | 1-4 | 125 | 1.5 | 75.8 |

**Example 5 - Photocured Coatings on Fused Quartz Substrate.**

UV curable compositions prepared in Examples 2 and 3 were applied to a fused silica glass plate substrate

having UV light transparency (from Specialty Glass Products) using a draw down bar at different coating thicknesses and photocured using the same IST UV systems in Example 4 at the same UV dosage. Each coated substrate was passed through UV curing twice to ensure a thorough and even cure. The dry film thicknesses and percent transmission are provided in Table 5.

The photocured coatings of Example 5 demonstrate less penetration of UV light to the substrate and subsequent layers occurs for the compositons that contain a UVA and HALS (*i.e.,* Compositions 3-1 and 3-4) compared to the composition that does not (*i.e.*, Composition 2-1) as judged by lower transmission values from 300-375 nm. It is believed this attribute would provide more resistance to UV light induced photodegradation of the photocured coatings.

Table 5. UV Transmission of Photocured Coatings

| Example | Composition Example | Coating Thickness (mils) | % Transmission (300 nm) | % Transmission (360 nm) | % Transmission (375 nm) |
|---|---|---|---|---|---|
| 5-0 | 2-1 | 1.2 | 44.96 | 91.41 | 94.74 |
| 5-1 | 3-1 | 1.2 | 0.0020 | 0.0053 | 4.64 |
| 5-2 | 3-4 | 1.2 | 0.0018 | 0.0046 | 47.02 |
| 5-3 | 3-4 | 1.8 | 0.0018 | 0.0047 | 31.00 |
| 5-4 | 3-4 | 2.3 | 0.0018 | 0.0045 | 19.78 |

**Example 6 - Photocured Coatings Scratch Resistance.**

UV curable compositions prepared in Example 2 were applied to cold rolled steel substrate and cured following the same procedure in Example 4. The scratch resistance of the coatings were determined and are provided in Table 6.

Scratch resistance was determined using the Crockmeter test. For the test, the width of the crocking head is 25 mm and the head is curved with a radius of 19 mm. The head of the crocking head is covered with ethylene propylene diene monomer rubber (EPDM) open celled foam with a Shore 00 hardness from 60. Movement of the cracking head relative to the sample is perpendicular to the axis of the surface curvature. An abrasive flexible polyester lapping film with aluminum oxide particles fixed with a synthetic adhesive is to be attached to the crocking head. Abrasive film is 3M 261X lapping film in 5μm grain (available from 3M). Gloss before scratching is to be measured on ten positions on each sample and averaged. The average gloss retention of two scratch lines is determined. It is possible that all scratch lines are applied to a single sample. The scratching line is generated through a relative movement of the sample to the crockmeter head with the lapping film. The following test conditions were used: 1) force applied to sample is 9N; 2) number of cycles to produce scratch line is 5 back and forth cycles; 3) length of scratch line is 80-100 mm; and 4) the speed of the crocking head is 1 Hz. After the test, gloss was measured at ten locations on each of the scratch lines and averaged. The percentage gloss loss was defined as the initial gloss minus the final gloss divided by the initial gloss multiplied by 100.

As shown in Table 6, the photocured coatings of Examples 6-1 and 6-3 with micronized silica (*i.e.,* Composition Examples 2-1 and 2-3) gave better scratch resistance compared to photocured coatings of Examples 6-2 and 6-4 that did not contain micronized silica (*i.e.,* Composition Examples 2-2 and 2-4).

Table 6. Photocured Coating Scratch Resistance

| Example | Compositon Example | 20 Degree Gloss Loss (%) | 60 Degree Gloss Loss (%) |
|---|---|---|---|
| 6-1 | 2-1 | 1.47 | 0.05 |
| 6-2 | 2-2 | 29.33 | 18.15 |
| 6-3 | 2-3 | 1.40 | 2.54 |
| 6-4 | 2-4 | 18.52 | 13.19 |

**Example 7 - Photocured Coatings Dirt Pick Up Resistance.**

UV curable compositions prepared in Examples 1 and 2 were applied to cold rolled steel substrate and cured following the same procedure in Example 4. To a cold rolled steel substrate the Commercial Formulation, Armorall Outlast Brake Dust Repellent, was applied following the container's application instructions (described below).

The friction coefficient was measured for Examples 7-1 to 7-4 (FIG. 1) using a Coefficient of Friction Tester. To

determine the friction coefficient, each panel was separately attached to a weighted sled and a second sample of the panel was attached to a test ramp. The weighted sled with the attached panel was placed on top of the second sample attached to the test ramp. The test ramp angle was slowly increased from 0° to 90° until the sled began to move. The angle of the test ramp was recorded once the sled had reached a specified distance.

The water contact angle was measured for Examples 7-1, 7-4 to 7-8, and Armorall (FIG. 2) using a Kruss DSA100 contact angle measurement system in standard mode.

The dirt pickup resistance of the coatings in Table 7 were then determined using a synthetic carpet soil. For the synthetic carpet soil (Textile Innovators, TA2M/9) dirt pickup test, the initial CIE Lab color ($L_1$, $a_1$, $b_1$) is measured for each panel. The test panels are heated to 120 °F for one hour in an oven. The panels are removed from the oven and while still hot 0.20 grams on synthetic carpet soil is poured onto each panel in a small area and spread over the entire panel surface. The panels are returned to the 120 °F oven and allowed to heat for one hour. The test panels are removed from the oven, inverted 90° and given a sharp tap on bench top to move any loose dirt. Any excess dirt is gently wiped away with a damp cotton cloth. The final CIE Lab color ($L_2$, $a_2$, $b_2$) is measured for each panel followed by calculation of total color change ($\Delta E$) by the following equation:

$$\Delta E = [(L_2-L_1)^2 + (a_2-a_1)^2 + (b_2-b_1)^2]^{1/2}$$

The coating of Composition Examples 2-1, 2-2, 2-7, and 2-8 (Example 7-5, 7-6, 7-11, and 7-12) having as a surface modifier a reactive polysiloxane-modified polymer with unsaturated terminal groups (surface modifier 1) had a lower change in color ($\Delta E$) which indicates better resistance to dirt pickup than the compositions with no surface modifier Examples 7-1 to 7-4 (*i.e.,* Composition Examples 1-1 to 1-4) or those with an unreactive polysiloxane surface modifier Examples 7-7 to 7-10 and 7-13 to 7-16 (*i.e.*, Composition Examples 2-3 to 2-6 and 2-9 to 2-12).

Table 7. Photocured Coating Dirt Pick Up Resistance

| Example | Composition Example | ΔE |
|---|---|---|
| 7-1 | 1-1 | 3.91 |
| 7-2 | 1-2 | 30.46 |
| 7-3 | 1-3 | 6.50 |
| 7-4 | 1-4 | 7.13 |
| 7-5 | 2-1 | 0.14 |
| 7-6 | 2-2 | 1.27 |
| 7-7 | 2-3 | 1.76 |
| 7-8 | 2-4 | 1.34 |
| 7-9 | 2-5 | 1.76 |
| 7-10 | 2-6 | 1.39 |
| 7-11 | 2-7 | 0.16 |
| 7-12 | 2-8 | 0.15 |
| 7-13 | 2-9 | 1.60 |
| 7-14 | 2-10 | 0.80 |
| 7-15 | 2-11 | 7.59 |
| 7-16 | 2-12 | 6.59 |

**Example 8 - Photocured Coatings Brake Dust Pick Up Resistance.**

UV curable compositions prepared in Example 2 were applied to cold rolled steel substrate and cured following the same procedure in Example 4. The brake dust pickup resistance of the coatings using automotive brake dust are provided in Table 8.

For the brake dust pickup test, the initial CIE Lab color ($L_1$, $a_1$, $b_1$) is measured for each panel. The test panels are dipped into a container of brake dust and placed in a 50 °C oven for one hour. The test panels are removed from the oven and, using 110 +/- 5 psig compressed air, the test panels are blown with the compressed air for 10 seconds. The panels are

lightly rinsed with deionized water to remove any loose brake dust to simulate a car wash. The panels are allowed to air dry and are not wiped with a cloth. The final CIE Lab color ($L_2$, $a_2$, $b_2$) is measured for each panel followed by calculation of total color change (ΔE).

Coating Examples 8-1 and 8-7 (*i.e.,* Composition Examples 2-1 and 2-7) having as a surface modifier a reactive polysiloxane-modified polymer with unsaturated terminal groups (surface modifier 1) and micronized silica (component 5) had a low change in color (ΔE) which indicates better resistance to brake dust pickup than coating Examples 8-3 to 8-6 and 8-9 to 8-12 produced from compositions with an unreactive polysiloxane surface modifier and/or no micronized silica (*i.e.,* Composition Examples 2-3 to 2-6 and 2-9 to 2-12).

Table 8. Photocured Coating Brake Dust Pick Up Resistance

| Example | Composition Example | ΔE |
|---|---|---|
| 8-1 | 2-1 | 1.12 |
| 8-2 | 2-2 | 7.72 |
| 8-3 | 2-3 | 25.60 |
| 8-4 | 2-4 | 20.13 |
| 8-5 | 2-5 | 5.86 |
| 8-6 | 2-6 | 6.99 |
| 8-7 | 2-7 | 1.44 |
| 8-8 | 2-8 | 9.93 |
| 8-9 | 2-9 | 20.04 |
| 8-10 | 2-10 | 25.51 |
| 8-11 | 2-11 | 7.93 |
| 8-12 | 2-12 | 13.38 |

**Example 9 - Photocured Coatings Brake Dust Pick Up Resistance in a Simulated Car Wash.**

UV curable compositions prepared in Examples 1 and 2 were applied to cold rolled steel substrate and cured following the same procedure in Example 4. In addition to the cured coating listed in Table 9, for Examples 9-2, 9-3, and 9-4 the panels were further coated with a Commercial Formulation after being laid flat, cleaned, and allowed to dry.

The Commercial Formulation was a commercial brake dust repellent formulation (Armorall Outlast Brake Dust Repellent), which was purchased from a retail automotive shop. According to the product's safety data sheet, the product has the composition below. It is noted that none of components have a functional group capable of covalently bonding into a UV-curable coating composition.

| Component | CAS Number | Weight Percent |
|---|---|---|
| Propellant (propane, isobutene) | 74-98-6/75-28-5 | 40-60 |
| Decamethylcyclopentasiloxane | 541-02-6 | 40-60 |
| Mixed Cyclosiloaxanes | 69430-24-6 | < 3 |
| Octamethylcyclotetrasiloaxne | 556-67-2 | < 1 |

The Commercial Formulation was applied to the panels of Examples 9-2, 9-3, and 9-4 following the container's application instructions:

(1) shake the container well;
(2) spray liberally over the entire surface;
(3) allow excess formulation to drip off;
(4) dry for one hour at room temperature (about 23 °C) without touching.

As the Commercial Formulation dried, any excess ran off the bottom of the panel leaving a white mark. The white

marks were wiped away with a towel. For each panel, the initial CIE Lab color ($L_1$, $a_1$, $b_1$) was determined following the procedure in Example 8. The test panels were then dipped into a container of brake dust and placed in a 50 °C oven for one hour. After removel from the oven, the panels were allowed to cool to ambient temperature followed by power washing for 10 seconds. The panels are padded dry with a cotton cloth (the panels were not wiped). The final CIE Lab color ($L_2$, $a_2$, $b_2$) was measured for each panel and the total color change (ΔE) was calculated according to Example 8. The brake dust pickup resistant test with the car wash simulation was repeated three more times to provide the four ΔE results (Table 9).

Table 9. Photocured Coating Brake Dust Pick Up Resistance

| Example | 9-1 | 9-2 | 9-3 | 9-4 |
|---|---|---|---|---|
| Composition Example | 2-1 | 2-10 | 1-2 | 1-3 |
| ΔE after 1$^{st}$ iteration | 0.12 | 0.12 | 2.34 | 0.20 |
| ΔE after 2$^{nd}$ iteration | 0.05 | 1.00 | 10.48 | 0.13 |
| ΔE after 3$^{rd}$ iteration | 0.14 | 5.57 | 18.95 | 1.56 |
| ΔE after 4$^{th}$ iteration | 0.26 | 5.91 | 27.12 | 3.69 |

Example 9-1 (without a Commercial Formulation coating) provided a lower change in color (ΔE), which indicates better brake dust pick up resistance when repeatedly exposed to brake dust after simulated car washes. Examples 9-2, 9-3, and 9-4 (with a Commercial Formulation coating) initially have a good brake dust resistance, but after each simulated car wash the resistance decreases. The data demonstrates that the Commerical Formulation provides a temporary benefit for brake dust pick up resistance and after numerous simulated car washes, the formulation is washed off and the benefit disappears.

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

The present disclosure is not to be limited in terms of the particular embodiments described in this application. Many modifications and variations can be made without departing from its scope, as will be apparent to those skilled in the art Functionally equivalent methods and compositions within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims. It is to be understood that this disclosure is not limited to particular methods, reagents, compounds compositions or biological systems, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, *etc.* As a non-limiting example, each range discussed herein can be readily broken down into a lower third, middle third and upper third, *etc.* As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

Other embodiments are set forth in the following claims.

## Claims

**1.** A UV curable coating composition comprising:

an ethylenically unsaturated polymerizable compound; and
a functionalized siloxane compound of Formula I:

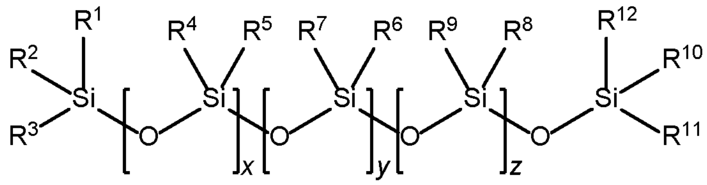

Formula I

wherein:

$R^1$, $R^2$, $R^3$, $R^4$, $R^5$, $R^6$, $R^7$, $R^8$, $R^9$, $R^{10}$, $R^{11}$, and $R^{12}$ are independently a H or hydrocarbon, wherein the hydrocarbon is:

optionally interrupted by one or more -O-, -CO-, -CONH-, -CONHCO-, and -NH-,
optionally substituted with one or more hydroxy groups,
optionally comprises a functional group comprising an ethylenically unsaturated group capable of undergoing covalently bonding during a photocuring process, or
a combination of two or more thereof; or

$R^8$ is a group of Formula II:

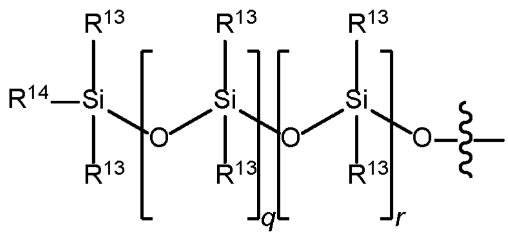

Formula II

wherein:

$R^{13}$ and $R^{14}$ at each occurrence are independently a H or $C_1$-$C_{20}$ hydrocarbon, wherein the hydrocarbon is:

optionally interrupted by one or more -O-, -CO-, -CONH-, - CONHCO-, and -NH-,
optionally substituted with one or more hydroxy groups,
optionally comprises a functional group comprising an ethylenical unsaturation capable of undergoing covalently bonding during a photocuring process, or
a combination of two or more thereof; and

*q* and *r* are independently 0 or an integer from 1 to 2000;

*x* is 0 or an integer from 1 to 2000;
*y* and *z* are independently 0 or an integer from 1 to 200;

with the proviso that $x+y+z \geq 3$ and at least one $R^1$, $R^2$, $R^3$, $R^4$, $R^5$, $R^6$, $R^7$, $R^8$, $R^9$, $R^{10}$, $R^{11}$, and $R^{12}$ comprises an ethylenical unsaturated functional group capable of undergoing covalent bonding during photocure;
wherein at least one of $R^2$, $R^6$, $R^8$, and $R^{10}$ is a group of Formula VI:

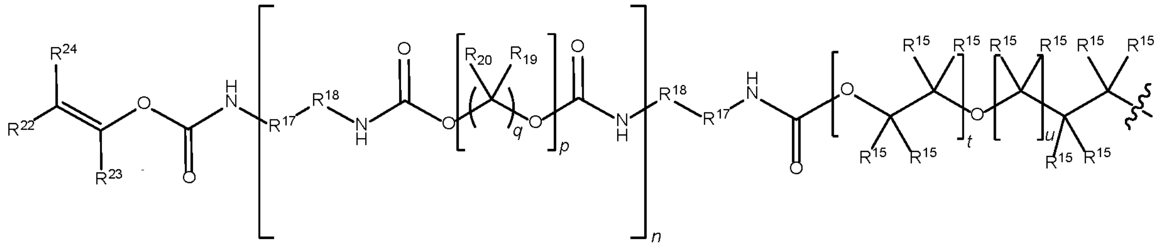

Formula VI

wherein:

$R^{15}$ is H or $C_1$-$C_{12}$ hydrocarbon radical;
$R^{17}$ at each occurrence is independently an alkylene, cycloalkylene, or arylene;
$R^{18}$ at each occurrence is independently a bond or $C_1$-$C_3$ alkylene;
$R^{19}$ and $R^{20}$ at each occurrence are independently H, alkyl, or aryl;
$R^{22}$, $R^{23}$, and $R^{24}$ are independently H or alkyl;
*n* and *p* are individually 0 or an integer from 1 to 20;
q is an integer from 1 to 15;
*r* is 0 or an integer from 1 to 40;
*s* is 0 or an integer from 1 to 100;
*t* is an integer from 2 to 100;
with the proviso that $r+s+t \geq 3$; and
*u* is 0 or an integer from 1 to 12.

**2.** The composition of claim 1, wherein at least two of $R^2$, $R^6$, $R^8$, and $R^{10}$ is a group of Formula VI.

**3.** The composition of claim 1 or claim 2, wherein

$R^{17}$ at each occurrence is independently an $C_5$-$C_{10}$ cycloalkylene or $C_6$-$C_{12}$ arylene;
$R^{18}$ at each occurrence is independently a bond or $C_1$-$C_3$ alkylene;
$R^{19}$ and $R^{20}$ at each occurrence are independently H, alkyl, or aryl;
X at each occurrence is independently -O- or -NH-;
$R^{22}$, $R^{23}$, and $R^{24}$ are independently H or alkyl;
*n* is 0 or an integer from 1-10;
*p* is an integer from 1-20; and
*q* is an integer from 1-3.

**4.** The composition of any one of claims 1-3, wherein

$R^{15}$ is H or $C_1$-$C_{12}$ alkyl;
$R^{17}$ at each occurrence is independently an $C_5$-$C_{10}$ cycloalkylene;
$R^{18}$ at each occurrence is independently a bond or $C_1$-$C_3$ alkylene;
$R^{19}$ and $R^{20}$ at each occurrence are independently H, alkyl, or aryl;
X at each occurrence is independently -O- or -NH-;
$R^{22}$, $R^{23}$, and $R^{24}$ are independently H or $C_1$-$C_6$ alkyl;
*n* is 0;
*q* is an integer from 1-3;
*t* is an integer from 2-50; and
*u* is 0 or an integer from 1-6.

**5.** The composition of any one of claims 1-4, wherein the functionalized siloxane compound is a compound of Formula IA:

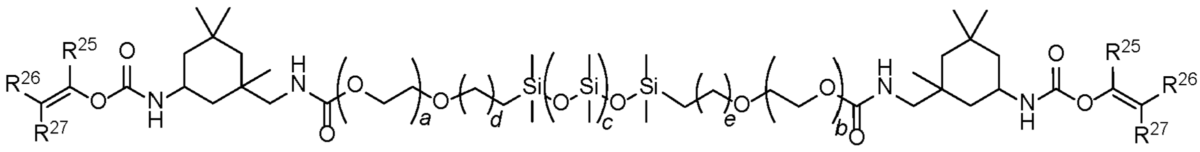

Formula IA

wherein:

$R^{25}$, $R^{26}$, and $R^{27}$ are independently H or $C_1$-$C_6$ alkyl;
*a* and *b* are independently an integer from 6-15;
*c* is an integer from10-30; and
*d* and *e* are independently 2 or 3.

**6.** The composition of claim 5, wherein $R^{25}$, $R^{26}$, and $R^{27}$ are independently H or $C_1$-$C_3$ alkyl.

**7.** The composition of claim 5 or claim 6, wherein $R^{25}$, $R^{26}$, and $R^{27}$ are independently H or $CH_3$.

**8.** The composition of any one of claims 5-7, wherein $R^{26}$ and $R^{27}$ are H.

**9.** The composition of claim 8, wherein $R^{25}$ is H or $CH_3$.

**10.** The composition of any one of claims 5-9, wherein *a* and *b* are independently an integer from 8 to 13.

**11.** The composition of any one of claims 5-10, wherein *a* and *b* are independently 9, 10, 11, or 12.

**12.** The composition of any one of claims 5-11, wherein *a* and *b* are the same.

**13.** The composition of any one of claims 5-11, wherein *a* and *b* are different.

**14.** The composition of any one of claims 5-13, wherein *c* is an integer from 12 to 25.

**15.** The composition of any one of claims 5-14, wherein *c* is an integer from 15 to 22.

**16.** The composition of any one of claims 5-15, wherein *c* is 16, 17, 18, 19, 20, or 21.

**17.** The composition of any one of claims 5-16, wherein *d* and *e* are each 2.

**18.** The composition of any one of claims 1-17 further comprising a micronized inorganic particle.

**19.** The composition of claim 18, wherein the micronized inorganic particle comprises zirconia, silica, titania, antimony oxides, alumina, tin oxides, or combinations of two or more thereof.

**20.** A UV curable coating composition comprising:

a micronized inorganic particle;
an ethylenically unsaturated polymerizable compound; and
a functionalized siloxane compound of Formula I:

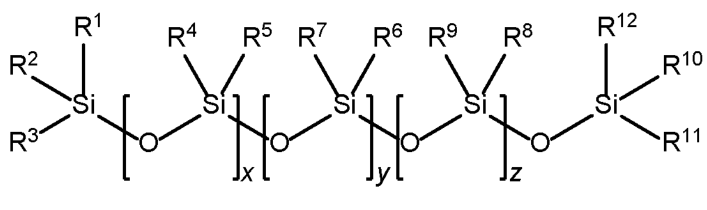

Formula I

wherein:

$R^1$, $R^2$, $R^3$, $R^4$, $R^5$, $R^6$, $R^7$, $R^8$, $R^9$, $R^{10}$, $R^{11}$, and $R^{12}$ are independently a H or hydrocarbon, wherein the hydrocarbon is:

optionally interrupted by one or more -O-, -CO-, -CONH-, -CONHCO-, and -NH-, optionally substituted with one or more hydroxy groups,
optionally contains a functional group comprising an ethylenically unsaturated group capable of undergoing covalently bonding during a photocuring process, or
a combination of two or more thereof; or

$R^8$ is a group of Formula II:

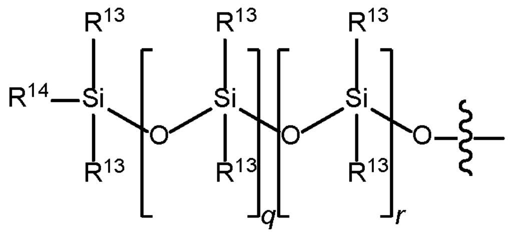

Formula II

wherein $R^{13}$ and $R^{14}$ at each occurrence are independently a H or $C_1$-$C_{20}$ hydrocarbon, wherein the hydrocarbon is:

optionally interrupted by one or more -O-, -CO-, -CONH-, - CONHCO-, and -NH-,
optionally substituted with one or more hydroxy groups,
optionally contains a functional group comprising an ethylenical unsaturation capable of undergoing covalently bonding during a photocuring process, or
a combination of two or more thereof;

q is 0 to 2000;
*r* is 0 to 200;

*x* is 0 to 2000;
*y* and z are independently 0 to 200;

with the proviso that $x+y+z \geq 3$ and at least one $R^1$, $R^2$, $R^3$, $R^4$, $R^5$, $R^6$, $R^7$, $R^8$, $R^9$, $R^{10}$, $R^{11}$, and $R^{12}$ comprises an ethylenical unsaturated functional group capable of undergoing covalently bonding during a photocuring, wherein at least one of $R^2$, $R^6$, $R^8$, and $R^{10}$ is a group of Formula VI:

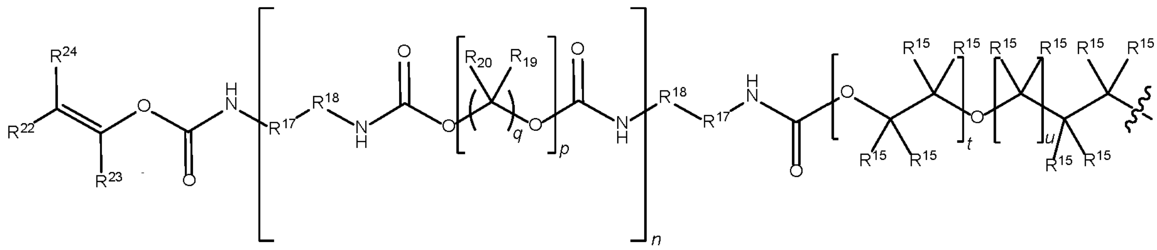

Formula VI

wherein:

$R^{15}$ is H or $C_1$-$C_{12}$ hydrocarbon radical;
$R^{17}$ at each occurrence is independently an alkylene, cycloalkylene, or arylene;
$R^{18}$ at each occurrence is independently a bond or $C_1$-$C_3$ alkylene;

$R^{19}$ and $R^{20}$ at each occurrence are independently H, alkyl, or aryl;
$R^{22}$, $R^{23}$, and $R^{24}$ are independently H or alkyl;
*n* and *p* are individually 0 or an integer from 1 to 20;
*q* is an integer from 1 to 15;
*r* is 0 or an integer from 1 to 40;
*s* is 0 or an integer from 1 to 100;
*t* is an integer from 2 to 100;
with the proviso that $r+s+t \geq 3$; and
*u* is 0 or an integer from 1 to 12.

**21.** An article comprising a substrate and a photocured coating, wherein the photocured coating is a prepared from the composition according to any one of claims 1-20.

**22.** The article of claim 21, wherein the photocured coating is a tinted coating.

**23.** The article of claim 21, wherein the photocured coating layer is a pigmented coating.

**Patentansprüche**

**1.** UV-härtbare Beschichtungszusammensetzung, umfassend:

eine ethylenisch ungesättigte polymerisierbare Verbindung und
eine funktionalisierte Siloxanverbindung der Formel I:

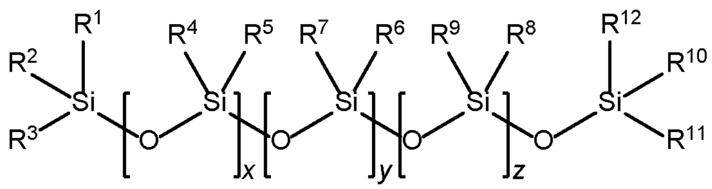

Formel I

wobei:
$R^1$, $R^2$, $R^3$, $R^4$, $R^5$, $R^6$, $R^7$, $R^8$, $R^9$, $R^{10}$, $R^{11}$ und $R^{12}$ unabhängig für H oder einen Kohlenwasserstoff stehen, wobei der Kohlenwasserstoff:

gegebenenfalls durch ein oder mehrere -O-, -CO-, -CONH-, -CONHCO- und -NH- unterbrochen ist,
gegebenenfalls durch eine oder mehrere Hydroxygruppen substituiert ist,
gegebenenfalls eine funktionelle Gruppe umfasst, die eine ethylenisch ungesättigte Gruppe umfasst, die während eines Photohärtungsprozesses eine kovalente Bindung eingehen kann, oder
eine Kombination von zwei oder mehr davon; oder
$R^8$ für eine Gruppe der Formel II steht:

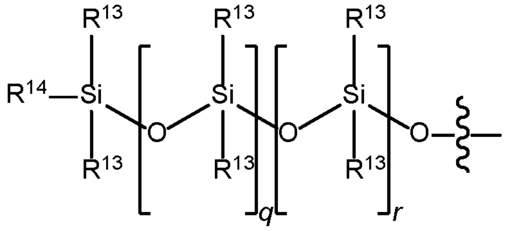

Formel II

wobei:
$R^{13}$ und $R^{14}$ bei jedem Auftreten unabhängig für H oder einen $C_1$-$C_{20}$-Kohlenwasserstoff stehen, wobei der Kohlenwasserstoff:

gegebenenfalls durch ein oder mehrere -O-, -CO-, -CONH-, -CONHCO- und -NH- unterbrochen ist, gegebenenfalls durch eine oder mehrere Hydroxygruppen substituiert ist, gegebenenfalls eine funktionelle Gruppe umfasst, die eine ethylenische Ungesättigtheit umfasst, die während eines Photohärtungsprozesses eine kovalente Bindung eingehen kann, oder eine Kombination von zwei oder mehr davon; und
q und r unabhängig für 0 oder eine ganze Zahl von 1 bis 2000 stehen;
x für 0 oder eine ganze Zahl von 1 bis 2000 steht;
y und z unabhängig für 0 oder eine ganze Zahl von 1 bis 200 stehen;
mit der Maßgabe, dass $x+y+z \geq 3$ und mindestens ein $R^1$, $R^2$, $R^3$, $R^4$, $R^5$, $R^6$, $R^7$, $R^8$, $R^9$, $R^{10}$, $R^{11}$ und $R^{12}$ eine ethylenisch ungesättigte funktionelle Gruppe umfasst, die während der Photohärtung eine kovalente Bindung eingehen kann;
wobei mindestens eines von $R^2$, $R^6$, $R^8$ und $R^{10}$ für eine Gruppe der Formel VI steht:

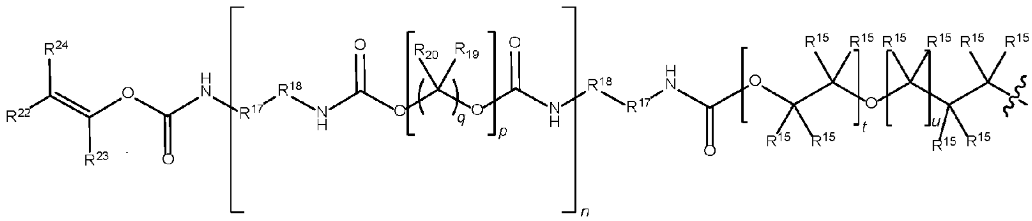

Formel VI

wobei:

$R^{15}$ für H oder einen $C_1$-$C_{12}$-Kohlenwasserstoffrest steht;
$R^{17}$ bei jedem Auftreten unabhängig für ein Alkylen, Cycloalkylen oder Arylen steht;
$R^{18}$ bei jedem Auftreten unabhängig für eine Bindung oder $C_1$-$C_3$-Alkylen steht;
$R^{19}$ und $R^{20}$ bei jedem Auftreten unabhängig für H, Alkyl oder Aryl stehen;
$R^{22}$, $R^{23}$ und $R^{24}$ unabhängig für H oder Alkyl stehen;
n und p jeweils für 0 oder eine ganze Zahl von 1 bis 20 stehen;
q für eine ganze Zahl von 1 bis 15 steht;
r für 0 oder eine ganze Zahl von 1 bis 40 steht;
s für 0 oder eine ganze Zahl von 1 bis 100 steht;
t für eine ganze Zahl von 2 bis 100 steht;
mit der Maßgabe, dass $r+s+t \geq 3$; und
u für 0 oder eine ganze Zahl von 1 bis 12 steht.

**2.** Zusammensetzung nach Anspruch 1, wobei mindestens zwei von $R^2$, $R^6$, $R^8$ und $R^{10}$ für eine Gruppe der Formel VI stehen.

**3.** Zusammensetzung nach Anspruch 1 oder Anspruch 2, wobei $R^{17}$ bei jedem Auftreten unabhängig für ein $C_5$-$C_{10}$-Cycloalkylen oder $C_6$-$C_{12}$-Arylen steht;

$R^{18}$ bei jedem Auftreten unabhängig für eine Bindung oder $C_1$-$C_3$-Alkylen steht;
$R^{19}$ und $R^{20}$ bei jedem Auftreten unabhängig für H, Alkyl oder Aryl stehen;
X bei jedem Auftreten unabhängig für -O- oder -NH- steht; $R^{22}$, $R^{23}$ und $R^{24}$ unabhängig für H oder Alkyl stehen;
n für 0 oder eine ganze Zahl von 1-10 steht;
p für eine ganze Zahl von 1-20 steht und
q für eine ganze Zahl von 1-3 steht.

**4.** Zusammensetzung nach einem der Ansprüche 1-3, wobei $R^{15}$ für H oder $C_1$-$C_{12}$-Alkyl steht;

$R^{17}$ bei jedem Auftreten unabhängig für ein $C_5$-$C_{10}$-Cycloalkylen steht;
$R^{18}$ bei jedem Auftreten unabhängig für eine Bindung oder $C_1$-$C_3$-Alkylen steht;
$R^{19}$ und $R^{20}$ bei jedem Auftreten unabhängig für H, Alkyl oder Aryl stehen;
X bei jedem Auftreten unabhängig für -O- oder -NH- steht;
$R^{22}$, $R^{23}$ und $R^{24}$ unabhängig für H oder $C_1$-$C_6$-Alkyl stehen;

n für 0 steht;
q für eine ganze Zahl von 1-3 steht;
t für eine ganze Zahl von 2-50 steht und
u für 0 oder eine ganze Zahl von 1-6 steht.

**5.** Zusammensetzung nach einem der Ansprüche 1-4, wobei es sich bei der funktionalisierten Siloxanverbindung um eine Verbindung der Formel IA handelt:

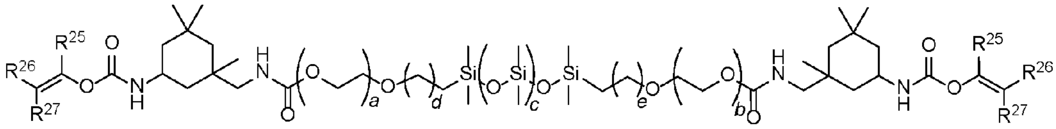

Formel IA

wobei:

$R^{25}$, $R^{26}$ und $R^{27}$ unabhängig für H oder $C_1$-$C_6$-Alkyl stehen;
a und b unabhängig für eine ganze Zahl von 6-15 stehen;
c für eine ganze Zahl von 10-30 steht und
d und e unabhängig für 2 oder 3 stehen.

**6.** Zusammensetzung nach Anspruch 5, wobei $R^{25}$, $R^{26}$ und $R^{27}$ unabhängig für H oder $C_1$-$C_3$-Alkyl stehen.

**7.** Zusammensetzung nach Anspruch 5 oder Anspruch 6, wobei $R^{25}$, $R^{26}$ und $R^{27}$ unabhängig für H oder $CH_3$ stehen.

**8.** Zusammensetzung nach einem der Ansprüche 5-7, wobei $R^{26}$ und $R^{27}$ für H stehen.

**9.** Zusammensetzung nach Anspruch 8, wobei $R^{25}$ für H oder $CH_3$ steht.

**10.** Zusammensetzung nach einem der Ansprüche 5-9, wobei a und b unabhängig für eine ganze Zahl von 8 bis 13 stehen.

**11.** Zusammensetzung nach einem der Ansprüche 5-10, wobei a und b unabhängig für 9, 10, 11 oder 12 stehen.

**12.** Zusammensetzung nach einem der Ansprüche 5-11, wobei a und b gleich sind.

**13.** Zusammensetzung nach einem der Ansprüche 5-11, wobei a und b verschieden sind.

**14.** Zusammensetzung nach einem der Ansprüche 5-13, wobei c für eine ganze Zahl von 12 bis 25 steht.

**15.** Zusammensetzung nach einem der Ansprüche 5-14, wobei c für eine ganze Zahl von 15 bis 22 steht.

**16.** Zusammensetzung nach einem der Ansprüche 5-15, wobei c für 16, 17, 18, 19, 20 oder 21 steht.

**17.** Zusammensetzung nach einem der Ansprüche 5-16, wobei d und e jeweils für 2 stehen.

**18.** Zusammensetzung nach einem der Ansprüche 1-17, ferner umfassend ein mikronisiertes anorganisches Partikel.

**19.** Zusammensetzung nach Anspruch 18, wobei das mikronisierte anorganische Partikel Zirconiumdioxid, Siliciumdioxid, Titandioxid, Antimonoxide, Aluminiumoxid, Zinnoxide oder Kombinationen von zwei oder mehr davon umfasst.

**20.** UV-härtbare Beschichtungszusammensetzung, umfassend:

ein mikronisiertes anorganisches Partikel;
eine ethylenisch ungesättigte polymerisierbare Verbindung und
eine funktionalisierte Siloxanverbindung der Formel I:

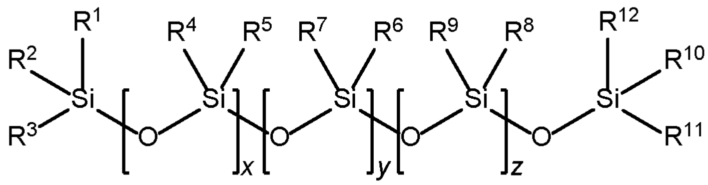

Formel I

wobei:
$R^1$, $R^2$, $R^3$, $R^4$, $R^5$, $R^6$, $R^7$, $R^8$, $R^9$, $R^{10}$, $R^{11}$ und $R^{12}$ unabhängig für H oder einen Kohlenwasserstoff stehen, wobei der Kohlenwasserstoff:

gegebenenfalls durch ein oder mehrere -O-, -CO-, -CONH-, -CONHCO- und -NH- unterbrochen ist, gegebenenfalls durch eine oder mehrere Hydroxygruppen substituiert ist,
gegebenenfalls eine funktionelle Gruppe enthält, die eine ethylenisch ungesättigte Gruppe umfasst, die während eines Photohärtungsprozesses eine kovalente Bindung eingehen kann, oder
eine Kombination von zwei oder mehr davon; oder
$R^8$ für eine Gruppe der Formel II steht:

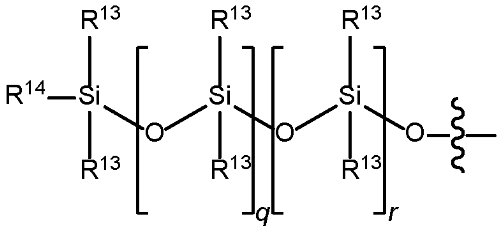

Formel II

wobei $R^{13}$ und $R^{14}$ bei jedem Auftreten unabhängig für H oder einen $C_1$-$C_{20}$-Kohlenwasserstoff stehen, wobei der Kohlenwasserstoff:

gegebenenfalls durch ein oder mehrere -O-, -CO-, -CONH-, -CONHCO- und -NH- unterbrochen ist,
gegebenenfalls durch eine oder mehrere Hydroxygruppen substituiert ist,
gegebenenfalls eine funktionelle Gruppe enthält, die eine ethylenische Ungesättigtheit umfasst, die während eines Photohärtungsprozesses eine kovalente Bindung eingehen kann, oder
eine Kombination von zwei oder mehr davon;
q für 0 bis 2000 steht;
r für 0 bis 200 steht;
x für 0 bis 2000 steht;
y und z unabhängig für 0 bis 200 stehen;
mit der Maßgabe, dass $x+y+z \geq 3$ und mindestens ein $R^1$, $R^2$, $R^3$, $R^4$, $R^5$, $R^6$, $R^7$, $R^8$, $R^9$, $R^{10}$, $R^{11}$ und $R^{12}$ eine ethylenisch ungesättigte funktionelle Gruppe umfasst, die während einer Photohärtung eine kovalente Bindung eingehen kann;
wobei mindestens eines von $R^2$, $R^6$, $R^8$ und $R^{10}$ für eine Gruppe der Formel VI steht:

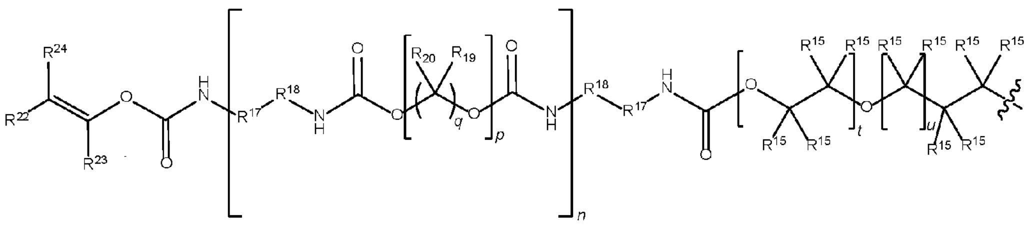

Formel VI

wobei:

$R^{15}$ für H oder einen $C_1$-$C_{12}$-Kohlenwasserstoffrest steht;
$R^{17}$ bei jedem Auftreten unabhängig für ein Alkylen, Cycloalkylen oder Arylen steht;
$R^{18}$ bei jedem Auftreten unabhängig für eine Bindung oder $C_1$-$C_3$-Alkylen steht;
$R^{19}$ und $R^{20}$ bei jedem Auftreten unabhängig für H, Alkyl oder Aryl stehen;
$R^{22}$, $R^{23}$ und $R^{24}$ unabhängig für H oder Alkyl stehen;
n und p jeweils für 0 oder eine ganze Zahl von 1 bis 20 stehen;
q für eine ganze Zahl von 1 bis 15 steht;
r für 0 oder eine ganze Zahl von 1 bis 40 steht;
s für 0 oder eine ganze Zahl von 1 bis 100 steht;
t für eine ganze Zahl von 2 bis 100 steht;
mit der Maßgabe, dass $r+s+t \geq 3$; und
u für 0 oder eine ganze Zahl von 1 bis 12 steht.

**21.** Artikel, umfassend ein Substrat und eine photogehärtete Beschichtung, wobei die photogehärtete Beschichtung aus der Zusammensetzung nach einem der Ansprüche 1-20 hergestellt ist.

**22.** Artikel nach Anspruch 21, wobei es sich bei der photogehärteten Beschichtung um eine getönte Beschichtung handelt.

**23.** Artikel nach Anspruch 21, wobei es sich bei der photogehärteten Beschichtung um eine pigmentierte Beschichtung handelt.

## Revendications

**1.** Composition de revêtement durcissable par des UV comprenant :

un composé polymérisable éthyléniquement insaturé ; et
un composé siloxane fonctionnalisé de formule I :

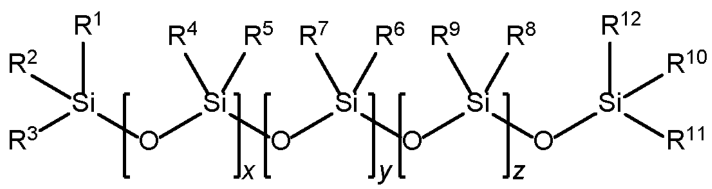

Formule I

$R^1$, $R^2$, $R^3$, $R^4$, $R^5$, $R^6$, $R^7$, $R^8$, $R^9$, $R^{10}$, $R^{11}$, et $R^{12}$ étant indépendamment un H ou hydrocarbure, l'hydrocarbure étant

éventuellement interrompu par un ou plusieurs -O-, -CO-, -CONH-, -CONHCO-, et -NH-,
éventuellement substitué par un ou plusieurs groupes hydroxy,
éventuellement comprenant un groupe fonctionnel comprenant un groupe éthyléniquement insaturé capable de subir une liaison de manière covalente pendant un processus de photodurcissement, ou
une combinaison de deux ou plus de ceux-ci ; ou
$R^8$ étant un groupe de formule II :

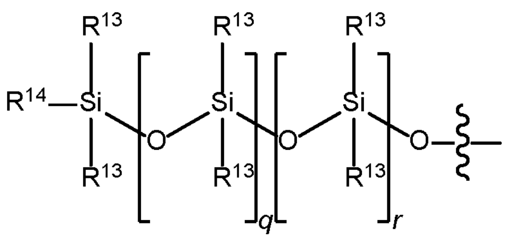

formule II

$R^{13}$ et $R^{14}$ en chaque occurrence étant indépendamment un H ou $C_1$-$C_{20}$ hydrocarbure, l'hydrocarbure étant :

éventuellement interrompu par un ou plusieurs -O-, -CO-, -CONH-, -CONHCO-, et -NH-,
éventuellement substitué par un ou plusieurs groupes hydroxy,
éventuellement comprenant un groupe fonctionnel comprenant une insaturation éthylénique capable de subir une liaison de manière covalente pendant un processus de photodurcissement, ou
une combinaison de deux ou plus de ceux-ci ; et
q et r étant indépendamment 0 ou un entier de 1 à 2 000 ;
x étant 0 ou un entier de 1 à 2 000 ;
y et z étant indépendamment 0 ou un entier de 1 à 200 ; à la condition que $x+y+z \geq 3$ et au moins un $R^1$, $R^2$, $R^3$, $R^4$, $R^5$, $R^6$, $R^7$, $R^8$, $R^9$, $R^{10}$, $R^{11}$, et $R^{12}$ comprennent un groupe fonctionnel éthylénique insaturé capable de subir une liaison covalente pendant un photodurcissement ;
au moins l'un parmi $R^2$, $R^6$, $R^8$, et $R^{10}$ étant un groupe de formule VI :

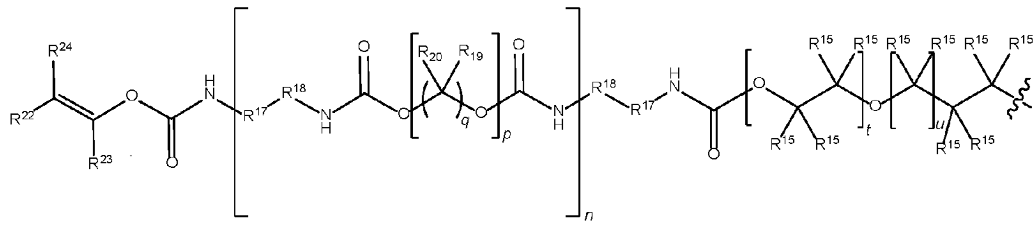

formule VI

$R^{15}$ étant H ou un radical $C_1$-$C_{12}$ hydrocarbure ;
$R^{17}$ en chaque occurrence étant indépendamment un alkylène, cycloalkylène, ou arylène ;
$R^{18}$ en chaque occurrence étant indépendamment une liaison ou $C_1$-$C_3$ alkylène ;
$R^{19}$ et $R^{20}$ en chaque occurrence étant indépendamment H, alkyle, ou aryle ;
$R^{22}$, $R^{23}$, et $R^{24}$ étant indépendamment H ou alkyle ;
n et p étant individuellement 0 ou un entier de 1 à 20 ;
q étant un entier de 1 à 15 ;
r étant 0 ou un entier de 1 à 40 ;
s étant 0 ou un entier de 1 à 100 ;
t étant un entier de 2 à 100 ;
à la condition que $r+s+t \geq 3$ ; et
u étant 0 ou un entier de 1 à 12.

**2.** Composition selon la revendication 1, au moins deux parmi $R^2$, $R^6$, $R^8$, et $R^{10}$ étant un groupe de formule VI.

**3.** Composition selon la revendication 1 ou la revendication 2,

$R^{17}$ en chaque occurrence étant indépendamment un $C_5$-$C_{10}$ cycloalkylène ou $C_6$-$C_{12}$ arylène ;
$R^{18}$ en chaque occurrence étant indépendamment une liaison ou $C_1$-$C_3$ alkylène ;
$R^{19}$ et $R^{20}$ en chaque occurrence étant indépendamment H, alkyle, ou aryle ;
X en chaque occurrence étant indépendamment -O- ou -NH- ; $R^{22}$, $R^{23}$, et $R^{24}$ étant indépendamment H ou alkyle ;
n étant 0 ou un entier de 1-10 ;
p étant un entier de 1-20 ; et
q étant un entier de 1-3.

**4.** Composition selon l'une quelconque des revendications 1-3,

$R^{15}$ étant H ou $C_1$-$C_{12}$ alkyle ;
$R^{17}$ en chaque occurrence étant indépendamment un $C_5$-$C_{10}$ cycloalkylène ;
$R^{18}$ en chaque occurrence étant indépendamment une liaison ou $C_1$-$C_3$ alkylène ;
$R^{19}$ et $R^{20}$ en chaque occurrence étant indépendamment H, alkyle, ou aryle ;

X en chaque occurrence étant indépendamment -O- ou -NH- ;
$R^{22}$, $R^{23}$, et $R^{24}$ étant indépendamment H ou $C_1$-$C_6$ alkyle ;
n étant 0 ;
q étant un entier de 1-3.
t étant un entier de 2-50 ; et
u étant 0 ou un entier de 1-6.

**5.** Composition selon l'une quelconque des revendications 1-4, le composé de siloxane fonctionnalisé étant un composé de formule IA :

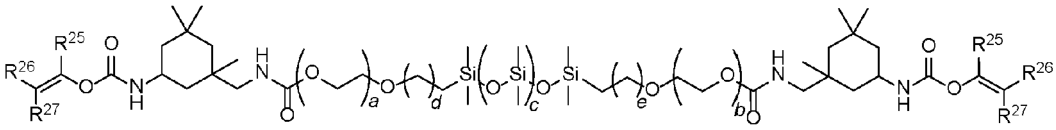

formule IA

$R^{25}$, $R^{26}$, et $R^{27}$ étant indépendamment H ou $C_1$-$C_6$ alkyle ;
a et b étant indépendamment un entier de 6-15 ;
c étant un entier de 10-30 ; et
d et e étant indépendamment 2 ou 3.

**6.** Composition selon la revendication 5, $R^{25}$, $R^{26}$, et $R^{27}$ étant indépendamment H ou $C_1$-$C_3$ alkyle.

**7.** Composition selon la revendication 5 ou la revendication 6, $R^{25}$, $R^{26}$, et $R^{27}$ étant indépendamment H ou $CH_3$.

**8.** Composition selon l'une quelconque des revendications 5-7, $R^{26}$ et $R^{27}$ étant H.

**9.** Composition selon la revendication 8, $R^{25}$ étant H ou $CH_3$.

**10.** Composition selon l'une quelconque des revendications 5-9, a et b étant indépendamment un entier de 8 à 13.

**11.** Composition selon l'une quelconque des revendications 5-10, a et b étant indépendamment 9, 10, 11, ou 12.

**12.** Composition selon l'une quelconque des revendications 5-11, a et b étant les mêmes.

**13.** Composition selon l'une quelconque des revendications 5-11, a et b étant différents.

**14.** Composition selon l'une quelconque des revendications 5-13, c étant un entier de 12 à 25.

**15.** Composition selon l'une quelconque des revendications 5-14, c étant un entier de 15 à 22.

**16.** Composition selon l'une quelconque des revendications 5-15, c étant 16, 17, 18, 19, 20, ou 21.

**17.** Composition selon l'une quelconque des revendications 5-16, d et e étant chacun 2.

**18.** Composition selon l'une quelconque des revendications 1-17 comprenant en outre une particule inorganique micronisée.

**19.** Composition selon la revendication 18, la particule inorganique micronisée comprenant une zircone, une silice, un oxyde de titane, des oxydes d'antimoine, une alumine, des oxydes d'étain ou des combinaisons de deux ou plus de ceux-ci.

**20.** Composition de revêtement durcissable par des UV comprenant :

une particule inorganique micronisée ;
un composé polymérisable éthyléniquement insaturé ; et
un composé siloxane fonctionnalisé de formule I :

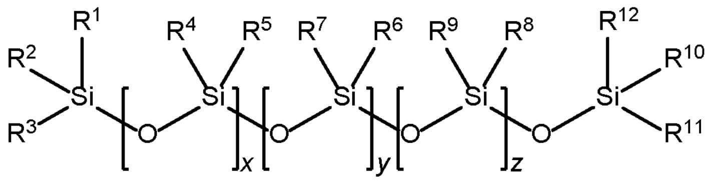

Formule I

$R^1$, $R^2$, $R^3$, $R^4$, $R^5$, $R^6$, $R^7$, $R^8$, $R^9$, $R^{10}$, $R^{11}$, et $R^{12}$ étant indépendamment un H ou hydrocarbure, l'hydrocarbure étant

éventuellement interrompu par un ou plusieurs -O-, -CO-, -CONH-, -CONHCO-, et -NH-, éventuellement substitué par un ou plusieurs groupes hydroxy,
éventuellement contenant un groupe fonctionnel comprenant un groupe éthyléniquement insaturé capable de subir une liaison de manière covalente pendant un processus de photodurcissement, ou
une combinaison de deux ou plus de ceux-ci ; ou
$R^8$ étant un groupe de formule II :

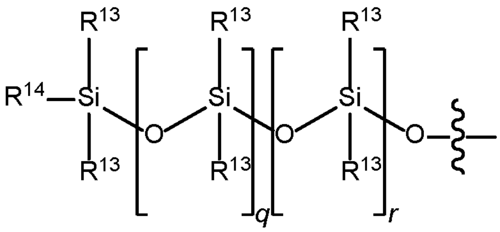

formule II

$R^{13}$ et $R^{14}$ en chaque occurrence étant indépendamment un H ou $C_1$-$C_{20}$ hydrocarbure, l'hydrocarbure étant :

éventuellement interrompu par un ou plusieurs -O-, -CO-, -CONH-, -CONHCO-, et -NH-,
éventuellement substitué par un ou plusieurs groupes hydroxy,
éventuellement contenant un groupe fonctionnel comprenant une insaturation éthylénique capable de subir une liaison de manière covalente pendant un processus de photodurcissement, ou
une combinaison de deux ou plus de ceux-ci ;
q étant 0 à 2 000 ;
r étant 0 à 200 ;
x étant 0 à 2 000 ;
y et z étant indépendamment 0 à 200 ;
à la condition que $x+y+z \geq 3$ et au moins un $R^1$, $R^2$, $R^3$, $R^4$, $R^5$, $R^6$, $R^7$, $R^8$, $R^9$, $R^{10}$, $R^{11}$, et $R^{12}$ comprennent un groupe fonctionnel éthylénique insaturé capable de subir une liaison de manière covalente pendant un photodurcissement,
au moins l'un parmi $R^2$, $R^6$, $R^8$, et $R^{10}$ étant un groupe de formule VI :

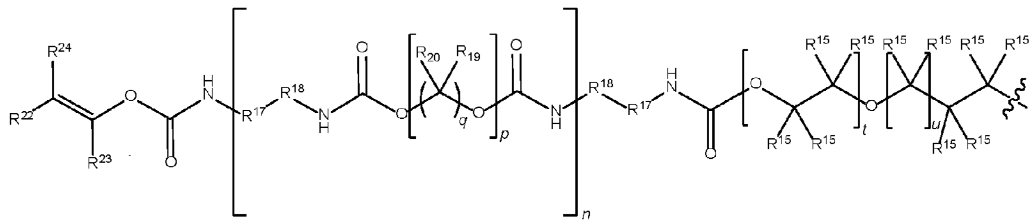

formule VI

$R^{15}$ étant H ou un radical $C_1$-$C_{12}$ hydrocarbure ;
$R^{17}$ en chaque occurrence étant indépendamment un alkylène, cycloalkylène, ou arylène ;
$R^{18}$ en chaque occurrence étant indépendamment une liaison ou $C_1$-$C_3$ alkylène ;

$R^{19}$ et $R^{20}$ en chaque occurrence étant indépendamment H, alkyle, ou aryle ;
$R^{22}$, $R^{23}$, et $R^{24}$ étant indépendamment H ou alkyle ;
n et p étant individuellement 0 ou un entier de 1 à 20 ;
q étant un entier de 1 à 15 ;
r étant 0 ou un entier de 1 à 40 ;
s étant 0 ou un entier de 1 à 100 ;
t étant un entier de 2 à 100 ;
à la condition que $r+s+t \geq 3$ ; et
u étant 0 ou un entier de 1 à 12.

**21.** Article comprenant un substrat et un revêtement photodurci, dans lequel le revêtement photodurci est préparé à partir de la composition selon l'une quelconque des revendications 1 à 20.

**22.** Article selon la revendication 21, dans lequel le revêtement photodurci est un revêtement teinté.

**23.** Article selon la revendication 21, dans lequel la couche de revêtement photodurci est un revêtement pigmenté.

FIG. 1

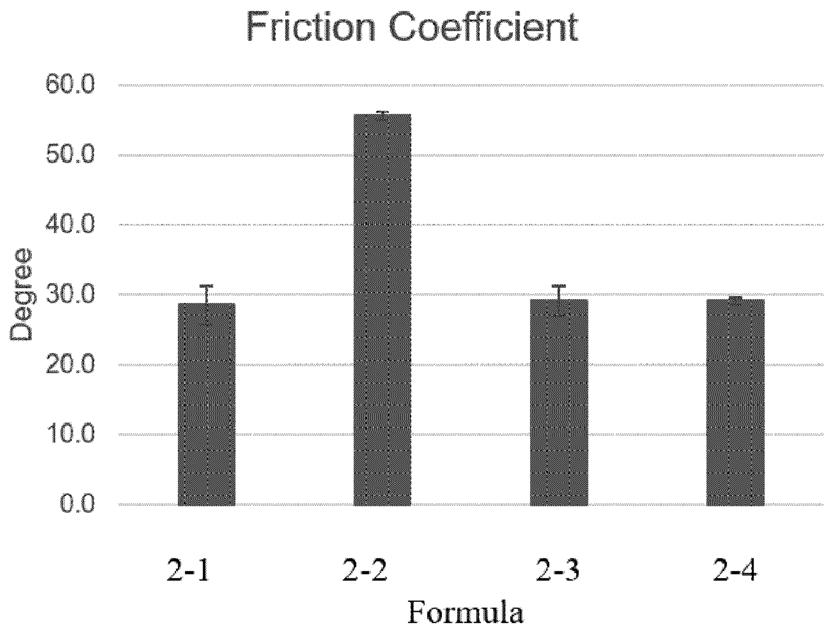
Friction Coefficient
60.0
50.0
40.0
30.0
20.0
10.0
0.0
Degree
2-1
2-2
2-3
2-4
Formula

FIG. 2

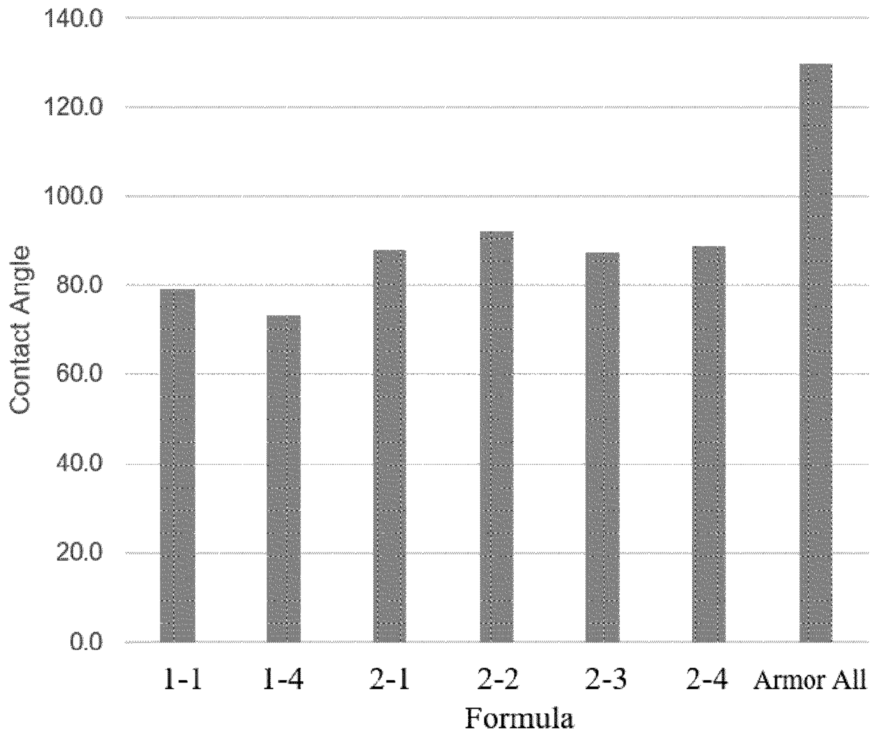
140.0
120.0
100.0
80.0
60.0
40.0
20.0
0.0
Contact Angle
1-1
1-4
2-1
2-2
2-3
2-4
Armor All
Formula

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62820127
- US 7241437 B
- US 6376590 B
- US 5942290 A
- US 5534559 A
- US 6020528 A
- US 5004770 A
- US 5204473 A
- US 5096950 A
- US 5300544 A
- US 5112890 A
- US 5124378 A
- US 5145893 A
- US 5216156 A
- US 5844026 A
- US 5980783 A
- US 6046304 A
- US 6117995 A
- US 6271377 B
- US 6297299 B
- US 6392041 B
- US 6376584 B
- US 6472456 B
- US 3004896 A
- US 3055896 A
- US 3072585 A
- US 3074910 A
- US 3189615 A
- US 3218332 A
- US 3230194 A
- US 4127586 A
- US 4226763 A
- US 4275004 A
- US 4278589 A
- US 4315848 A
- US 4347180 A
- US 4383863 A
- US 4675352 A
- US 4681905 A
- US 4853471 A
- US 5268450 A
- US 5278314 A
- US 5280124 A
- US 5319091 A
- US 5410071 A
- US 5436349 A
- US 5516914 A
- US 5554760 A
- US 5563242 A
- US 5574166 A
- US 5607987 A
- US 5977219 A
- US 6166218 A
- US 3843371 A
- US 4619956 A
- US 4740542 A
- US 5096489 A
- US 5106891 A
- US 5298067 A
- US 5300414 A
- US 5354794 A
- US 5461151 A
- US 5476937 A
- US 5489503 A
- US 5543518 A
- US 5556973 A
- US 5597854 A
- US 5681955 A
- US 5726309 A
- US 5736597 A
- US 5942626 A
- US 5959008 A
- US 5998116 A
- US 6013704 A
- US 6060543 A
- US 6242598 B
- US 6255483 B
- EP 160723 A
- US 5175030 A, Lu
- US 5183597 A, Lu


### Non-patent literature cited in the description


- *CHEMICAL ABSTRACTS*, 163702-01-0
- *CHEMICAL ABSTRACTS*, 182635-99-0
- *CHEMICAL ABSTRACTS*, 7443-25-6
- *CHEMICAL ABSTRACTS*, 147783-69-5
- **KOLESKE et al.** *Paint and Coatings Industry*, April 2003, 12-86